# EUROPEAN PATENT APPLICATION

(11) **EP 3 937 590 A1**
(43) Date of publication of application: **12.01.2022**
(21) Application number: 20782711.4
(22) Date of filing: 26.03.2020
(51) Int. Cl.: H04W 76/12

(54) **COMMUNICATION METHOD AND COMMUNICATION APPARATUS**

(30) Priority: 29.03.2019 CN 201910252461
(71) Applicant: Huawei Technologies Co., Ltd., Longgang Shenzhen, Guangdong 518129 (CN)
(72) Inventor: XU, Xiaoying, Shenzhen, Guangdong 518129 (CN); HUANG, Qufang, Shenzhen, Guangdong 518129 (CN); FAN, Qiang, Shenzhen, Guangdong 518129 (CN)
(74) Representative: Gill Jennings & Every LLP
(86) International application number: PCT/CN2020/081325
(87) International publication number: WO 2020/200024

(57) **Abstract**

This application provides a communication method and a communications apparatus. The communication method includes: when a radio bearer RB needs to be established between a network device and a terminal device, the network device includes a first node and a second node, and functional entities corresponding to the RB include one PDCP entity and more than two RLC entities corresponding to the PDCP entity. The method includes: determining, by the first node, configuration information, where the configuration information is used to instruct the second node to establish N tunnels, the tunnel is used to transmit PDCP data or RLC data between the first node and the second node, and N is an integer greater than or equal to 2; and transmitting, by the first node, the configuration information to the second node. In the technical solutions provided in this application, a multi-carrier feature and a dual-connectivity feature that can be used when a terminal device communicates with an access network device are fully used, so that performance of PDCP data duplication transmission is improved.

## Description

This application claims priority to Chinese Patent Application No. 201910252461.0, filed with the China National Intellectual Property Administration on March 29, 2019 and entitled "COMMUNICATION METHOD AND COMMUNICATIONS APPARATUS", which is incorporated herein by reference in its entirety.

### TECHNICAL FIELD

This application relates to the communications field, and in particular, to a communication method and a communications apparatus.

### BACKGROUND

A future 5th generation (5th generation, 5G) system mainly supports three types of services:
enhanced mobile broadband (enhanced mobile broadband, eMBB) communications, mass machine type communications (massive machine type communications, mMTC), and ultra-reliable and low latency communications (ultra-reliable and low latency communications, URLLC). URLLC has relatively high requirements on both a latency and reliability. Currently, the Third Generation Partnership Project (the 3rd generation partnership project, 3GPP) organization provides a solution that meets latency and reliability requirements: a duplication (duplication) transmission mechanism. To be specific, a same packet data convergence protocol (packet data convergence protocol, PDCP) layer protocol data unit (protocol data unit, PDU) is transmitted by using multiple paths, transmission reliability is improved by using multipath transmission gains, and a transmission latency is reduced. Such transmission is hereinafter referred to as PDCP data duplication transmission.

Specifically, PDCP data duplication transmission is classified into PDCP data duplication transmission in carrier aggregation (carrier aggregation, CA) and PDCP data duplication transmission in dual connectivity (dual connectivity, DC). Signaling data and/or service data transmitted between a terminal device and an access network (radio access network, RAN) device over an air interface may be carried on one or more radio bearers (radio bearer, RB) for transmission. For one RB, the terminal device and the access network device separately configure one PDCP entity for the RB. In a case of PDCP data duplication transmission, the terminal device and the access network device separately configure a plurality of radio link control (radio link control, RLC) entities for the PDCP entity, and one RLC entity corresponds to one logical channel (logical channel, LCH). For PDCP data duplication transmission in CA, a plurality of LCHs corresponding to the PDCP data duplication transmission are processed by one MAC entity at a media access control (media access control, MAC) layer, data from the plurality of different RLC logical channels is separately mapped to different carriers for transmission, and the different carriers may correspond to different baseband parameters (numerology) or transmission time interval (transmission time interval, TTI) duration (duration). For PDCP data duplication transmission in DC, a plurality of LCHs corresponding to the PDCP data duplication transmission are separately mapped to different MAC entities, data from the plurality of different RLC logical channels is separately mapped to different access network devices for transmission, and the different access network devices may correspond to different numerology or TTI duration. How to fully use multi-carrier and dual-connectivity features that can be used when the terminal device communicates with the access network device to improve performance of PDCP data duplication transmission becomes a problem to be resolved urgently.

### SUMMARY

This application provides a communication method and a node, to improve performance of PDCP data duplication transmission by fully using a multi-carrier scenario and a dual-connectivity scenario that can be used when a terminal device communicates with an access network device.

According to a first aspect, a communication method is provided. When a radio bearer RB is established between a network device and a terminal device, the network device includes a first node and a second node, and functional entities corresponding to the RB include one packet data convergence protocol PDCP entity and more than two radio link control RLC entities corresponding to the PDCP entity. The method includes the following steps: The first node determines configuration information, where the configuration information is used to instruct the second node to establish N tunnels, the tunnel is used to transmit PDCP data or RLC data between the first node and the second node, and N is an integer greater than or equal to 2; and the first node transmits the configuration information to the second node.

In the communication method provided in this embodiment of this application, a master node (the first node) transmits configuration information to a secondary node (the second node), to instruct the secondary node to establish a plurality of tunnels with the master node for transmitting PDCP data or RLC data. Therefore, reliability of data transmission between the master node and the secondary node is improved.

It should be understood that, that the first node is the master node means that a channel for transmitting data and/or signaling is established between the first node and an authentication management function AMF network element in a core network device. However, the master node is not limited to the first node in this application.

It should also be understood that specific forms of the first node and the second node may be different in different communications systems. For example, when the RB is established between a radio access network device and the terminal device, the first node may be a RAN device, and the second node may also be a RAN device; or when the RB is established between a distributed unit DU and the terminal device, the first node may be a centralized unit CU, and the second node may be a DU. Specifically, when the first node is a CU, if the CU is divided into a CU-UP and a CU-CP, it should be understood that the first node in this application has functions of both the CU-UP and the CU-CP.

It should also be understood that this application may be applied to establishment of the RB, but it is not defined that after the RB is established, the first node cannot transmit the configuration information to the second node. After the RB is established between the network device and the terminal device, a configuration of the RB may also be changed by using the configuration information. In other words, in this application, a case in which one radio bearer RB is established between the network device and the terminal device may be: one radio bearer RB needs to be established between the network device and the terminal device, or one radio bearer RB is established between the network device and the terminal device.

Specifically, the configuration information in this embodiment of this application includes information about the RB and information about the N tunnels.

With reference to the first aspect, in some implementations of the first aspect, the configuration information is further used to instruct the second node to establish N RLC entities; or the configuration information further includes channel quantity indication information, where the channel quantity indication information is used to instruct the second node to establish M RLC entities, and M is a positive integer.

In the communication method provided in this embodiment of this application, when the master node needs to indicate that a quantity of tunnels established by the secondary node is equal to a quantity of RLC entities established on the secondary node, the configuration information may be further used to indicate the quantity of RLC entities established by the second node. Alternatively, a quantity of RLC entities established by the secondary node is irrelevant to a quantity of tunnels established by the secondary node, that is, the master node transmits channel quantity indication information to the secondary node, to indicate the quantity of RLC entities established by the secondary node. Therefore, in the communication method provided in this embodiment of this application, it may be indicated that the quantity of tunnels established by the secondary node is equal to the quantity of RLC entities, or the quantity of tunnels established by the secondary node may be decoupled from the quantity of RLC entities, so that a flexible solution is provided for selecting the quantity of RLC entities established by the secondary node.

It should be understood that, in a duplication transmission scenario, RLC entities established by the network device are in a one-to-one correspondence to channels between the network device and the terminal device. Therefore, establishing an RLC entity by the secondary node may be understood as establishing a channel between the secondary node and the terminal device.

With reference to the first aspect, in some implementations of the first aspect, each RLC entity established by the second node corresponds to one identifier; and the method further includes the following step: The first node receives a response message transmitted by the second node, where the response message includes the identifier corresponding to each RLC entity established by the second node, and the identifier corresponding to the RLC entity is at least one of the following plurality of items: an identifier of the RLC entity, a logical channel LCH identifier of an LCH of the RLC entity, a tunnel identifier of a tunnel corresponding to the RLC entity, and a channel identifier of a channel corresponding to the RLC entity.

In the communication method provided in this embodiment of this application, the secondary node may configure a corresponding identifier for each of at least one RLC entity established by the secondary node, that is, the identifier corresponding to the RLC entity may indicate the corresponding RLC entity. Optionally, to avoid a conflict of identifier information corresponding to RLC entities in a communications system jointly established by the master node and the secondary node, before configuring an identifier for an RLC entity established by the secondary node, the secondary node may learn in advance an identifier corresponding to an RLC entity established on the master node. Therefore, when the secondary node configures the identifier for the RLC entity established by the secondary node, use of the identifier corresponding to the RLC entity on the master node is avoided. Further, the secondary node may feed back, to the master node by using a response message, the identifier corresponding to the RLC entity established by the secondary node, so that the master node can learn the identifier corresponding to each RLC entity established by the secondary node, where the identifier corresponding to the RLC entity is at least one of the following plurality of items: the identifier of the RLC entity, a logical channel LCH identifier of an LCH of the RLC entity, a tunnel identifier of a tunnel corresponding to the RLC entity, and a channel identifier of a channel corresponding to the RLC entity.

With reference to the first aspect, in some implementations of the first aspect, the method further includes the following step: The first node transmits de-configuration information to the second node, where the de-configuration information is used to instruct the second node to remove at least one RLC entity, where the de-configuration information includes an identifier corresponding to each of the at least one RLC entity; or the de-configuration information includes a first value, and the first value indicates a quantity of RLC entities to be removed by the second node; or the at least one RLC entity is some or all RLC entities among all the RLC entities established by the secondary node except a primary RLC entity.

In the communication method provided in this embodiment of this application, the master node may further instruct the secondary node to remove an RLC entity that has been established on the secondary node. The secondary node may be instructed in a plurality of manners. For example, provided that the master node knows the identifiers corresponding to the RLC entities on the secondary node, an identifier corresponding to an RLC entity to be removed may be indicated, to instruct the secondary node to remove the RLC entity corresponding to the identifier; or only a quantity of RLC entities that need to be removed is indicated, and the secondary node performs removal; or the secondary node is instructed to remove all the RLC entities except the primary RLC entity, to increase flexibility of the solution.

With reference to the first aspect, in some implementations of the first aspect, the method further includes the following step: The first node transmits first indication information to the second node, where the first indication information indicates a quantity of RLC entities allowed to be activated on the second node, where the first indication information includes a second value, and the second value is a value of the quantity of RLC entities allowed to be activated on the second node; or the first indication information includes a third value, and the third value is a value of a quantity of initially activated tunnels among the N tunnels.

In the communication method provided in this embodiment of this application, the master node may further indicate a quantity of RLC entities that can be activated by the secondary node. The quantity of RLC entities that can be activated by the secondary node may be indicated in a plurality of manners. For example, the quantity of RLC entities that can be activated is explicitly indicated; or tunnels that are initially in an activated state are indicated, and the secondary node infers, based on a quantity of tunnels that are initially in the activated state, a quantity of RLC entities that can be activated, thereby increasing flexibility of the solution.

With reference to the first aspect, in some implementations of the first aspect, the configuration information includes second indication information, where the second indication information is used to indicate an initial state of each RLC entity established by the secondary node, and the second indication information indicates that the initial state of each RLC entity established by the secondary node is an activated state; or the second indication information includes a fourth value, where the fourth value is a quantity of RLC entities that are initially in an activated state among the RLC entities established by the secondary node; or the second indication information indicates that a duplication transmission mode of the RB is in an activated state, where the duplication transmission mode indicates that PDCP data of the RB is transmitted by using a plurality of RLC entities.

In the communication method provided in this embodiment of this application, the master node may further indicate an initial state of an RLC entity established by the secondary node. The initial state of the RLC entity established by the secondary node may be displayed in a plurality of manners or implicitly, so that flexibility of the solution is increased.

With reference to the first aspect, in some implementations of the first aspect, the response message further includes first status indication information, where the first status indication information is used to indicate whether each of the RLC entities established by the secondary node is activated; and the first node determines second status indication information based on whether each RLC entity on the first node is activated and the first status indication information carried in the response message, where the second status indication information indicates whether each of more than two RLC entities corresponding to the PDCP entity is activated; or the first node does not need to determine the second status indication information based on the first status indication information, where the second status indication information indicates whether the RLC entity established on the first node is activated, and the first node transmits the second status indication information to the terminal device.

In the communication method provided in this embodiment of this application, the master node may learn whether an RLC entity established on the secondary node is activated, and notify the terminal device whether an RLC entity established on the master node is activated and whether the RLC entity established on the secondary node is activated, so that the terminal device can know which RLC entities are in the activated state and which RLC entities are in a deactivated state, and that when performing uplink data transmission, the terminal device can accurately learn on which channels data is transmitted; or the master node only transmits information about whether the RLC entity of the master node is activated to the terminal device, so that the terminal device learns whether the RLC entity established on the master node is activated.

It should be understood that, when the master node learns whether the RLC entity on the secondary node is activated, the master node may further instruct to deactivate the activated RLC entity. An identifier is different from an identifier corresponding to the RLC entity established by the first node.

It should also be understood that when the first node transmits the second status indication information to the terminal device, and the second status indication information indicates whether each of the more than two RLC entities corresponding to the PDCP entity is activated, the second node may learn, based on the foregoing response message, whether the RLC entity established by the secondary node is activated. For example, the response message carries the first status indication information indicating whether each RLC entity established by the secondary node is activated.

With reference to the first aspect, in some implementations of the first aspect, the second status indication information includes: a preset field, where one bit in the preset field is used to indicate whether an RLC entity established on the first node is activated, and in the preset field, positions of bits corresponding to RLC entities established on the first node are sorted based on values of LCH identifiers of the RLC entities established on the first node; or status information included in an LCH configuration corresponding to each RLC entity established on the first node, where the status information indicates whether the corresponding RLC entity is activated.

With reference to the first aspect, in some implementations of the first aspect, the second status indication information includes: a preset field, where one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

Specifically, the preset field is a bitmap including three bits.

In the communication method provided in this embodiment of this application, a manner in which the master node notifies the terminal device whether each RLC entity is activated may be indicating, in a form of one preset field, whether each RLC entity is activated, or may be adding one piece of status indication information to an LCH corresponding to each RLC entity, to indicate whether the corresponding RLC entity is activated, where each RLC entity is independent. Therefore, flexibility of the solution is increased.

With reference to the first aspect, in some implementations of the first aspect, the configuration information includes mode indication information, the mode indication information is used to indicate a mode in which the second node performs PDCP data duplication transmission, and the mode is one of the following three modes: carrier aggregation CA, dual connectivity DC, and CA and DC.

In the communication method provided in this embodiment of this application, the master node may explicitly notify the secondary node of a current duplication transmission mode, that is, the secondary node does not need to infer the current duplication transmission mode based on the quantity of RLC entities established by the secondary node, thereby improving reliability of the solution.

With reference to the first aspect, in some implementations of the first aspect, the PDCP entity is on the second node, and the method further includes the following steps: The first node receives at least one piece of PDCP data; and the first node performs duplication detection based on a sequence number corresponding to each of the at least one piece of PDCP data.

In the communication method provided in this embodiment of this application, a node not configured with a PDCP entity can also perform duplication detection.

It should be understood that, in this application, it is not defined that the PDCP entity is definitely on the second node. Alternatively, the PDCP entity may be definitely on the first node. In this case, the second node in the communication method provided in this application can also perform duplication detection.

With reference to the first aspect, in some implementations of the first aspect, that the first node receives at least one piece of PDCP data includes: the first node receives, by using the N tunnels, the at least one piece of PDCP data transmitted by the second node; and after performing duplication detection, the first node transmits a plurality of pieces of PDCP data to the terminal device by using a plurality of RLC entities established on the first node; or the first node receives, by using at least one RLC entity established on the first node, at least one piece of PDCP or RLC data transmitted by the terminal device; and after performing duplication detection, the first node transmits a plurality of pieces of PDCP data to the second node by using the N tunnels.

In the communication method provided in this embodiment of this application, after performing duplication detection, a node not configured with a PDCP entity can transmit a plurality of pieces of data.

According to a second aspect, a communication method is provided. When a radio bearer RB is established between a network device and a terminal device, the network device includes a first node and a second node, and functional entities corresponding to the RB include one packet data convergence protocol PDCP entity and more than two radio link control RLC entities corresponding to the PDCP entity. The method includes the following steps: The second node receives configuration information transmitted by the first node, where the configuration information is used to instruct the second node to establish N tunnels, the tunnel is used to transmit PDCP data or RLC data between the first node and the second node, and N is an integer greater than or equal to 2; and the second node establishes N tunnels between the second node and the first node based on the configuration information.

In the communication method provided in this embodiment of this application, a secondary node (the second node) receives configuration information transmitted by a master node (the first node), and the secondary node establishes, based on the configuration information, a plurality of tunnels used to transmit PDCP data or RLC data between the secondary node and the master node. Therefore, reliability of data transmission between the master node and the secondary node is improved.

It should be understood that, that the first node is the master node means that a channel for transmitting data and/or signaling is established between the first node and an authentication management function AMF network element in a core network device. However, the master node is not limited to the first node in this application.

It should also be understood that specific forms of the first node and the second node may be different in different communications systems. For example, when the RB is established between a radio access network device and the terminal device, the first node may be a RAN access network device, and the second node may also be a RAN access network device; or when the RB is established between a distributed unit DU and the terminal device, the first node may be a centralized unit CU, and the second node may be a DU. Specifically, when the first node is a CU, if the CU is divided into a CU-UP and a CU-CP, it should be understood that the first node in this application has functions of both the CU-UP and the CU-CP.

Specifically, the configuration information in this embodiment of this application includes information about the RB and information about the N tunnels.

With reference to the second aspect, in some implementations of the second aspect, the configuration information is further used to instruct the second node to establish N RLC entities; or the configuration information further includes channel quantity indication information, where the channel quantity indication information is used to instruct the second node to establish M RLC entities, and M is a positive integer.

In the communication method provided in this embodiment of this application, when the master node needs to indicate that a quantity of tunnels established by the secondary node is equal to a quantity of RLC entities established on the secondary node, the configuration information may be further used to indicate the quantity of RLC entities established by the secondary node. Alternatively, a quantity of RLC entities established by the secondary node is irrelevant to a quantity of tunnels established by the secondary node, that is, the master node transmits channel quantity indication information to the secondary node, to indicate the quantity of RLC entities established by the secondary node. Therefore, in the communication method provided in this embodiment of this application, it may be indicated that the quantity of tunnels established by the secondary node is equal to the quantity of RLC entities, or the quantity of tunnels established by the secondary node may be decoupled from the quantity of RLC entities, so that a flexible solution is provided for selecting the quantity of RLC entities established by the secondary node.

It should be understood that, in a duplication transmission scenario, RLC entities established by the network device are in a one-to-one correspondence to channels between the network device and the terminal device. Therefore, establishing an RLC entity by the secondary node may be understood as establishing a channel between the secondary node and the terminal device.

With reference to the second aspect, in some implementations of the second aspect, the second node configures an identifier for each RLC entity established by the secondary node; and the second node transmits a response message to the first node, where the response message includes the identifier corresponding to each RLC entity established by the secondary node, and the identifier corresponding to the RLC entity is at least one of the following plurality of items: an identifier of the RLC entity, a logical channel LCH identifier of an LCH of the RLC entity, a tunnel identifier of a tunnel corresponding to the RLC entity, and a channel identifier of a channel corresponding to the RLC entity.

In the communication method provided in this embodiment of this application, the secondary node may configure a corresponding identifier for each of at least one RLC entity established by the secondary node, that is, the identifier corresponding to the RLC entity may indicate the corresponding RLC entity. Optionally, to avoid a conflict of identifier information corresponding to RLC entities in a communications system jointly established by the master node and the secondary node, before configuring an identifier for an RLC entity established by the secondary node, the secondary node may learn in advance an identifier corresponding to an RLC entity established on the master node. Therefore, when the secondary node configures the identifier for the RLC entity established by the secondary node, use of the identifier corresponding to the RLC entity on the master node is avoided. Further, the secondary node may feed back, to the master node by using a response message, the identifier corresponding to the RLC entity established by the secondary node, so that the master node can learn the identifier corresponding to each RLC entity established by the secondary node, where the identifier corresponding to the RLC entity is at least one of the following plurality of items: the identifier of the RLC entity, a logical channel LCH identifier of an LCH of the RLC entity, a tunnel identifier of a tunnel corresponding to the RLC entity, and a channel identifier of a channel corresponding to the RLC entity.

With reference to the second aspect, in some implementations of the second aspect, the method further includes the following step: The second node receives de-configuration information transmitted by the first node, where the de-configuration information is used to instruct the second node to remove at least one RLC entity, where the de-configuration information includes an identifier corresponding to each of the at least one RLC entity; or the de-configuration information includes a first value, and the first value indicates a quantity of RLC entities to be removed by the second node; or the at least one RLC entity is some or all RLC entities among all the RLC entities established by the secondary node except a primary RLC entity.

In the communication method provided in this embodiment of this application, the secondary node may further remove, based on de-configuration information transmitted by the master node, an RLC entity that has been established on the secondary node. The secondary node may be instructed in a plurality of manners. For example, provided that the master node knows the identifiers corresponding to the RLC entities on the secondary node, an identifier corresponding to an RLC entity to be removed may be indicated, to instruct the secondary node to remove the RLC entity corresponding to the identifier; or only a quantity of RLC entities that need to be removed is indicated, and the secondary node performs removal; or the secondary node is instructed to remove all the RLC entities except the primary RLC entity, to increase flexibility of the solution.

With reference to the second aspect, in some implementations of the second aspect, the method further includes the following step: The second node receives first indication information transmitted by the first node, where the first indication information indicates a quantity of RLC entities allowed to be activated on the second node, or the second node determines, based on a predefined quantity of RLC entities allowed to be activated, a quantity of RLC entities allowed to be activated on the second node, where the first indication information includes a second value, and the second value is a value of the quantity of RLC entities allowed to be activated on the second node; or the first indication information includes a third value, and the third value is a value of a quantity of initially activated tunnels among the N tunnels.

In the communication method provided in this embodiment of this application, the secondary node may further determine, based on a first indication information transmitted by the master node, a quantity of RLC entities that can be activated by the secondary node. The quantity of RLC entities that can be activated by the secondary node may be indicated in a plurality of manners. For example, the quantity of RLC entities that can be activated is explicitly indicated; or tunnels that are initially in an activated state are indicated, and the secondary node infers, based on a quantity of tunnels that are initially in the activated state, a quantity of RLC entities that can be activated, thereby increasing flexibility of the solution.

With reference to the second aspect, in some implementations of the second aspect, the configuration information includes second indication information, where the second indication information is used to indicate an initial state of each RLC entity established by the secondary node, and the second indication information indicates that the initial state of each RLC entity established by the secondary node is an activated state; or the second indication information includes a fourth value, where the fourth value is a quantity of RLC entities that are initially in an activated state among the RLC entities established by the secondary node; or the second indication information indicates that a duplication transmission mode of the RB is in an activated state, where the duplication transmission mode indicates that PDCP data of the RB is transmitted by using a plurality of RLC entities.

In the communication method provided in this embodiment of this application, the secondary node may further determine an initial state of an established RLC entity based on a second indication information transmitted by the master node. The initial state of the RLC entity established by the secondary node may be displayed in a plurality of manners or implicitly, so that flexibility of the solution is increased.

With reference to the second aspect, in some implementations of the second aspect, the response message further includes first status indication information, where the first status indication information is used to indicate whether each of the RLC entities established by the secondary node is activated; and the first status indication information is used by the first node to determine second status indication information, and the second status indication information indicates whether each of more than two RLC entities corresponding to the PDCP entity is activated.

In the communication method provided in this embodiment of this application, the response message transmitted by the secondary node to the master node may further include whether an RLC entity established by the secondary node is activated, so that the master node can learn whether the RLC entity established on the secondary node is activated and notify the terminal device whether an RLC entity established by the master node is activated and whether the RLC entity established by the secondary node is activated, and that the terminal device can know which RLC entities are in the activated state and which RLC entities are in a deactivated state. Therefore, when performing uplink data transmission, the terminal device can accurately learn on which channels data is transmitted.

It should be understood that, when the master node learns whether the RLC entity on the secondary node is activated, the master node may further instruct to deactivate the activated RLC entity.

With reference to the second aspect, in some implementations of the second aspect, the method further includes the following steps: The second node determines third status indication information, where the third status indication information indicates whether each of the more than two RLC entities corresponding to the PDCP entity is activated, or indicates whether the RLC entity established on the second node is activated; and the second node transmits the third status indication information to the terminal device.

In the communication method provided in this embodiment of this application, the secondary node may learn whether an RLC entity established on the master node is activated, and notify the terminal device whether an RLC entity established on the secondary node is activated and whether the RLC entity established on the master node is activated, so that the terminal device can know which RLC entities are in the activated state and which RLC entities are in the deactivated state, and that when performing uplink data transmission, the terminal device can accurately learn on which channels data is transmitted; or the secondary node only transmits information about whether the RLC entity of the secondary node is activated to the terminal device, so that the terminal device learns whether the RLC entity established on the secondary node is activated.

With reference to the second aspect, in some implementations of the second aspect, the third status indication information includes: a preset field, where one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

With reference to the second aspect, in some implementations of the second aspect, the third status indication information includes: a preset field, where one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

Specifically, the preset field is a bitmap including three bits.

In the communication method provided in this embodiment of this application, a manner in which the secondary node notifies the terminal device whether each RLC entity is activated may be indicating, in a form of one preset field, whether each RLC entity is activated, or may be adding one piece of status indication information to an LCH corresponding to each RLC entity, to indicate whether the corresponding RLC entity is activated, where each RLC entity is independent. Therefore, flexibility of the solution is increased.

With reference to the second aspect, in some implementations of the second aspect, the configuration information includes mode indication information, the mode indication information is used to indicate a mode in which the second node performs PDCP data duplication transmission, and the mode is one of the following three modes: carrier aggregation CA, dual connectivity DC, and CA and DC.

In the communication method provided in this embodiment of this application, the master node may explicitly notify the secondary node of a current duplication transmission mode, that is, the secondary node does not need to infer the current duplication transmission mode based on the quantity of RLC entities established by the secondary node, thereby improving reliability of the solution.

With reference to the second aspect, in some implementations of the second aspect, the PDCP entity is on the second node, and the method further includes the following steps: The first node receives at least one piece of PDCP data; and the first node performs duplication detection based on a sequence number corresponding to each of the at least one piece of PDCP data.

In the communication method provided in this embodiment of this application, a node not configured with a PDCP entity can also perform duplication detection.

It should be understood that, in this application, it is not defined that the PDCP entity is definitely on the second node. Alternatively, the PDCP entity may be definitely on the first node. In this case, the second node in the communication method provided in this application can also perform duplication detection.

With reference to the second aspect, in some implementations of the second aspect, that the first node receives at least one piece of PDCP data includes: the first node receives, by using the N tunnels, the at least one piece of PDCP data transmitted by the second node; and after performing duplication detection, the first node transmits a plurality of pieces of PDCP data to the terminal device by using a plurality of RLC entities established on the first node; or the first node receives, by using at least one RLC entity established on the first node, at least one piece of PDCP or RLC data transmitted by the terminal device; and after performing duplication detection, the first node transmits a plurality of pieces of PDCP data to the second node by using the N tunnels.

In the communication method provided in this embodiment of this application, after performing duplication detection, a node not configured with a PDCP entity can transmit a plurality of pieces of data.

According to a third aspect, a communication method is provided. When a radio bearer RB is established between a network device and a terminal device, the network device includes a first node and a second node, and functional entities corresponding to the RB include one packet data convergence protocol PDCP entity and more than two radio link control RLC entities corresponding to the PDCP entity. The method includes the following steps: The terminal device receives second status indication information transmitted by the first node, where the second status indication information indicates whether each of more than two RLC entities corresponding to the PDCP entity is activated, or indicates whether an RLC entity established on the first node is activated; or the terminal device receives third status indication information transmitted by the first node, where the third status indication information indicates whether each of more than two RLC entities corresponding to the PDCP entity is activated, or indicates whether an RLC entity established on the second node is activated. It may be understood that the RLC entity established on the first node may be replaced with an RLC entity associated with a MAC entity established on the terminal, where the MAC entity corresponds to a MAC entity established on the first node. The RLC entity established on the second node may be replaced with an RLC entity associated with another MAC entity established on the terminal, where the MAC entity corresponds to a MAC entity established on the second node.

The terminal device transmits, based on at least one of the second status indication information and the third status indication information, PDCP data on a channel corresponding to the activated RLC entity.

In the communication method provided in this embodiment of this application, the terminal device may receive, from a master node or a secondary node, status indication information indicating whether an RLC entity established on the master node and an RLC entity established on the secondary node are activated; or the terminal device receives, from the master node, status indication information indicating whether an RLC entity established by the master node is activated, and receives, from the secondary node, status indication information indicating whether an RLC entity established by the secondary node is activated. In other words, in this application, the master node and the secondary node may perform signaling interaction to learn whether the RLC entity established on the peer node is activated, and transmit, to the terminal device through one node, status indication information indicating whether the RLC entity established on the node itself is activated and whether the RLC entity established on the peer node is activated. Alternatively, the master node and the secondary node do not need to exchange whether RLC entities established by the master node and the secondary node are activated, but only separately notify, by using status indication information, the terminal device whether the RLC entity established by the node itself is activated, and the terminal device determines, based on the received status indication information, which node transmits the status indication information, to determine whether the RLC entity established on each node is activated.

With reference to the third aspect, in some implementations of the third aspect, the second status indication information includes: a preset field, where one bit in the preset field is used to indicate whether an RLC entity established on the first node is activated, and in the preset field, positions of bits corresponding to RLC entities established on the first node are sorted based on values of LCH identifiers of the RLC entities established on the first node; or status information included in an LCH configuration corresponding to each RLC entity established on the first node, where the status information indicates whether the corresponding RLC entity is activated.

With reference to the third aspect, in some implementations of the third aspect, the second status indication information includes: a preset field, where one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

With reference to the third aspect, in some implementations of the third aspect, the third status indication information includes: a preset field, where one bit in the preset field is used to indicate whether an RLC entity established on the second node is activated, and in the preset field, positions of bits corresponding to RLC entities established on the second node are sorted based on values of LCH identifiers of the RLC entities established on the second node; or status information included in an LCH configuration corresponding to each RLC entity established on the second node, where the status information indicates whether the corresponding RLC entity is activated.

With reference to the third aspect, in some implementations of the third aspect, the third status indication information includes: a preset field, where one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

Specifically, the preset field is a bitmap including three bits.

In the communication method provided in this embodiment of this application, a manner in which the secondary node or the master node notifies the terminal device whether each RLC entity is activated may be indicating, in a form of one preset field, whether each RLC entity is activated, or may be adding one piece of status indication information to an LCH corresponding to each RLC entity, to indicate whether the corresponding RLC entity is activated, where each RLC entity is independent. Therefore, flexibility of the solution is increased.

According to a fourth aspect, a communications apparatus is provided. The apparatus may be configured to perform operations performed by the first node in any one of the first aspect and the possible implementations of the first aspect. Specifically, the communications apparatus may include components (means) corresponding to the steps or functions described in the first aspect, and may be the first node in the first aspect. The steps or functions may be implemented by software, hardware, or a combination of hardware and software.

According to a fifth aspect, a communications apparatus is provided. The apparatus may be configured to perform operations performed by the second node in any one of the second aspect and the possible implementations of the second aspect. Specifically, the communications apparatus may include components (means) corresponding to the steps or functions described in the second aspect, and may be the second node in the second aspect. The steps or functions may be implemented by software, hardware, or a combination of hardware and software.

According to a sixth aspect, a communications apparatus is provided. The apparatus may be configured to perform operations performed by the terminal device in any one of the third aspect and the possible implementations of the third aspect. Specifically, the communications apparatus may include components (means) corresponding to the steps or functions described in the third aspect, and may be the terminal device in the third aspect. The steps or functions may be implemented by software, hardware, or a combination of hardware and software.

According to a seventh aspect, a communications device is provided, including a processor, a transceiver, and a memory, where the memory is configured to store a computer program, the transceiver is configured to perform transmitting and receiving steps in the communication method in any one of the possible implementations of the first aspect to the third aspect, and the processor is configured to invoke and run the computer program in the memory, so that the communications device performs the communication method in any one of the possible implementations of the first aspect to the third aspect.

Optionally, one or more processors exist, and one or more memories exist.

Optionally, the memory may be integrated with the processor, or the memory and the processor are separately disposed.

Optionally, the transceiver includes a transmitter (transmitter) and a receiver (receiver).

In a possible design, a communications device is provided, including a transceiver, a processor, and a memory. The processor is configured to control the transceiver to transmit and receive signals. The memory is configured to store a computer program. The processor is configured to invoke and run the computer program in the memory, so that the communications device performs the method in any one of the first aspect or the possible implementations of the first aspect.

In another possible design, a communications device is provided, including a transceiver, a processor, and a memory. The processor is configured to control the transceiver to transmit and receive signals. The memory is configured to store a computer program. The processor is configured to invoke and run the computer program in the memory, so that the communications device performs the method in any one of the second aspect or the possible implementations of the second aspect.

In still another possible design, a communications device is provided, including a transceiver, a processor, and a memory. The processor is configured to control the transceiver to transmit and receive signals. The memory is configured to store a computer program. The processor is configured to invoke and run the computer program in the memory, so that the communications device performs the method in any one of the third aspect or the possible implementations of the third aspect.

According to an eighth aspect, a system is provided, and the system includes the communications apparatuses provided in the fourth aspect to the sixth aspect.

According to a ninth aspect, a computer program product is provided. The computer program product includes a computer program (which may also be referred to as code or instructions). When the computer program is run, a computer is enabled to perform the method in any one of the possible implementations of the first aspect to the third aspect.

According to a tenth aspect, a computer-readable medium is provided. The computer-readable medium stores a computer program (which may also be referred to as code or instructions). When the computer program is run on a computer, the computer is enabled to perform the method in any one of the possible implementations of the first aspect to the third aspect.

According to an eleventh aspect, a system-on-a-chip is provided, including a memory and a processor, where the memory is configured to store a computer program, and the processor is configured to invoke and run the computer program in the memory, so that a communications device equipped with the system-on-a-chip performs the method in any one of the possible implementations of the first aspect to the third aspect.

### BRIEF DESCRIPTION OF DRAWINGS

FIG. 1 is a schematic diagram of a communications system 100 to which a communication method according to an embodiment of this application is applicable;
FIG. 2(a) and FIG. 2(b) are schematic diagrams of scenarios to which a communication method according to an embodiment of this application is applicable;
FIG. 3 is a schematic diagram of a user plane L2 protocol stack of a RAN device in dual connectivity;
FIG. 4 is a schematic flowchart of a communication method according to an embodiment of this application;
FIG. 5(a) to FIG. 5(d) are schematic diagrams of transmission modes of PDCP data or RLC data between a first node, a second node, and a terminal device according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic diagram of a communications apparatus 10 according to this application;
FIG. 9 is a schematic structural diagram of a terminal device 20 to which an embodiment of this application is applicable;
FIG. 10 is a schematic diagram of a communications apparatus 30 according to this application;
FIG. 11 is a schematic structural diagram of a first node 40 to which an embodiment of this application is applicable;
FIG. 12 is a schematic diagram of a communications apparatus 50 according to this application; and
FIG. 13 is a schematic structural diagram of a second node 60 to which an embodiment of this application is applicable.

### DESCRIPTION OF EMBODIMENTS

The following describes the technical solutions of this application with reference to the accompanying drawings.

The technical solutions of the embodiments of this application may be applied to various communications systems, such as: a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communications system, a future 5th generation (5th generation, 5G) system, or a new radio (new radio, NR) system.

The terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

The network device in the embodiments of this application may be a device configured to communicate with the terminal device. The network device may be a base station (base transceiver station, BTS) in code division multiple access (code division multiple access, CDMA), or may be a base station (NodeB, NB) in a wideband code division multiple access (wideband code division multiple access, WCDMA) system, or may be an evolved base station (evolved NodeB, eNB, or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. This is not limited in the embodiments of this application.

It should be understood that the network device used in this application mainly refers to a radio access network device. The radio access network device includes a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer, and may further include a service data adaptation protocol (service data adaptation protocol, SDAP) layer. The radio access network device may be the foregoing base station, or may be a wireless local area network access point, or the like. If the radio access network device is a base station, the radio access network device may be further classified into two types: a macro base station and a small-cell base station, and the small-cell base station may be further classified into a micro base station, a picocell base station, and the like. If the radio access network device is a wireless local area network access point, the radio access network device may be a device such as a router or a switch.

Further, the radio access network device may be further divided based on protocol layers into at least one distributed unit (distributed unit, DU) and one centralized unit (central unit, CU) connected to the at least one DU. The CU and the DU may be separately deployed on different physical devices. The CU is responsible for operations at the RRC layer, the SDAP layer, and the PDCP layer, and the DU is responsible for operations at the RLC layer, the MAC layer, and the PHY layer. Further, the CU may be further divided into a control plane centralized unit (CU-CP) and a user plane centralized unit (CU-UP), where the CU-CP and the CU-UP may also be deployed on different physical devices. The CU-CP is responsible for control plane processing at the RRC layer and the PDCP layer, and the CU-UP is responsible for user plane processing at the SDAP layer and the PDCP layer.

In the embodiments of this application, the terminal device or the network device includes a hardware layer, an operating system layer that runs on the hardware layer, and an application layer that runs on the operating system layer. The hardware layer includes hardware such as a central processing unit (central processing unit, CPU), a memory management unit (MMU), and a memory (also referred to as a main memory). The operating system may be any one or more computer operating systems that implement service processing by using a process (process), for example, a Linux operating system, a Unix operating system, an Android operating system, an iOS operating system, or a Windows operating system. The application layer includes a browser, an address book, word processing software, instant messaging software, and other applications. In addition, the embodiments of this application do not specifically limit a specific structure of an execution body of a communication method provided in the embodiments of this application, as long as communication can be performed according to the communication method provided in the embodiments of this application by running a program that records code of the communication method provided in the embodiments of this application. For example, the execution body of the communication method provided in the embodiments of this application may be the terminal device or the network device, or a functional module that is in the terminal device or the network device and capable of invoking the program and executing the program.

In addition, aspects or features of this application may be implemented as a method, an apparatus or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry instructions and/or data.

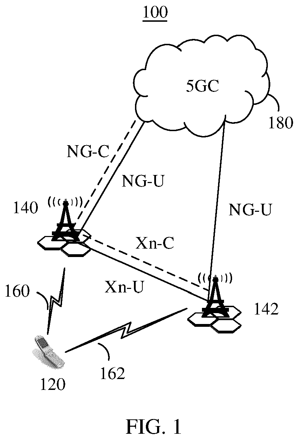

For example, the radio access network device used in this application is the foregoing base station, the relay station, the access point, the vehicle-mounted device, the wearable device, or a transmission and reception point, and the terminal device uses a transmission resource used by a cell managed by the RAN device (for example, a frequency domain resource, a time domain resource, or a code domain resource) to communicate with the RAN device. In this case, the communication method provided in the embodiments of this application may be applied to a scenario shown in FIG. 1. FIG. 1 is a schematic diagram of a communications system 100 to which the communication method provided in the embodiments of this application is applicable.

A terminal device 120 is connected to a RAN device 140 in a wireless manner by using an air interface 160. Optionally, the communications system further includes: the terminal device 120 is connected to a RAN device 142 in a wireless manner by using an air interface 162. In this case, the RAN device 140 may be referred to as a master node (master node, MN), and the RAN device 142 may be referred to as a secondary node (secondary node, SN). The RAN device 140 is connected to a 5G core network (5G core, 5GC) 180 by using an NG user plane (NG user plane, NG-U) interface to implement user plane data transmission, and is connected to the 5GC by using an NG control plane (NG control plane, NG-C) interface to implement control plane data transmission. The RAN device 142 is connected to the 5GC device 180 by using an NG-U interface to implement user plane data transmission. Control plane data interaction is implemented between the RAN device 140 and the RAN device 142 by using an Xn control plane (Xn control plane, Xn-C) interface, and user plane data interaction is implemented by using an Xn user plane (Xn user plane, Xn-U) interface.

For example, the master node 140 is connected to an access and mobility management function (access and mobility management function, AMF) node in the 5GC 180 by using the NG-C interface; and the master node 140 and the secondary node 142 are connected to user plane function (user plane function, UPF) nodes in the 5GC 180 by using the NG-U interfaces. Further, the communications system may further include wireless connections between the terminal device and more RAN devices. It should be understood that when the terminal device is simultaneously connected to a plurality of RAN devices in a wireless manner, one RAN device is a master node, and other RAN devices are secondary nodes.

It should be understood that the master node and the secondary node are defined and distinguished in this application mainly based on whether they are nodes that establish control plane connections to a core network device. Specifically, in this application, a RAN device of a node that establishes a connection to the AMF, in a plurality of RAN devices, is referred to as a master node.

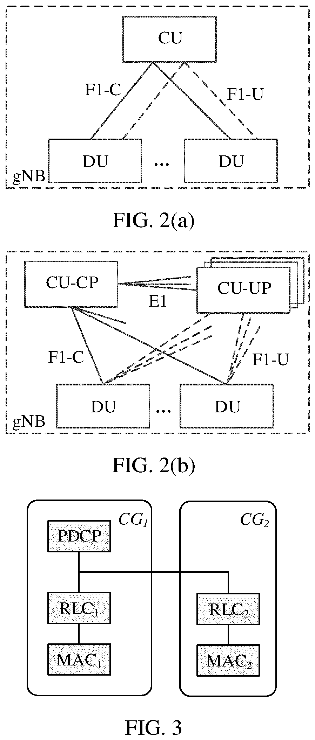

For example, a radio access network device used in this application may be a device divided based on protocol layers into at least one DU and one CU connected to the at least one DU. Therefore, the communication method provided in the embodiments of this application may be applied to a communications system shown in FIG. 2(a) and FIG. 2(b). FIG. 2(a) shows an architecture of a gNB divided into a CU and DUs. One gNB may include one CU and one or more DUs, and the one or more DUs are controlled by the CU. One DU is connected to the CU by using a control plane interface (for example, F1-C), and is configured to transmit control plane data. One DU is connected to the CU by using a user plane interface (for example, F1-U), and is configured to transmit user plane data. Further, the CU may be further divided into a control plane centralized unit (that is, a centralized unit control plane CU-CP network element) and a user plane centralized unit (that is, a centralized unit user plane CU-UP network element). The CU-CP and the CU-UP may also be separately deployed on different physical devices. The CU-CP is responsible for control plane processing at an RRC layer and a PDCP layer, and the CU-UP is responsible for user plane processing at an SDAP layer and a PDCP layer. FIG. 2(b) shows an architecture of a gNB divided into a CU-CP, a CU-UP, and DUs. One gNB may include one CU-CP, one or more CU-UPs, and one or more DUs. One CP-UP is connected to only one CU-CP by using a control plane interface (such as E1), and is configured to transmit control plane data. One DU is connected to only one CU-CP by using a control plane interface (for example, F1-C), and is configured to transmit control plane data. Under control of the CU-CP, one DU may be connected to one or more CU-UPs, one CU-UP may also be connected to one or more DUs, and the CU-UP is connected to the DU by using a user plane interface (for example, F1-U), and is configured to transmit user plane data. It should be noted that, to maintain network resilience, one DU or one CU-UP may also be connected to a plurality of CU-CPs. In this case, the plurality of CU-CPs serve as backups of each other. In an actual application, only one CU-CP is running at a same time. It should be understood that, for an architecture of a RAN device divided into a CU and a DU, a protocol stack division manner for dividing the RAN device into the CU and the DU is merely an example. The RAN device may also be divided into the CU and the DU in another division manner. For example, the CU may be responsible for operations at an RRC layer, an SDAP layer, a PDCP layer, and an RLC layer, and the DU is responsible for operations at a MAC layer and a PHY layer. Alternatively, the CU is responsible for operations at an RRC layer and an SDAP layer, and the DU is responsible for operations at a PDCP layer, an RLC layer, a MAC layer, a PHY layer, and the like. Similarly, a protocol stack division manner between the CU-CP and the CU-UP in the CU is also variable. This is not specifically limited in this application.

It should be understood that FIG. 1 and FIG. 2(a) and FIG. 2(b) illustrate, by using only examples, scenarios to which the communication method provided in the embodiments of this application can be applied. However, these examples do not constitute any limitation on the protection scope of this application, that is, the communication method provided in the embodiments of this application can be further applied to other scenarios. Details are not described herein.

With reference to FIG. 1 and FIG. 2(a) and FIG. 2(b), the foregoing briefly describes the scenarios to which the communication method provided in the embodiments of this application can be applied. For ease of understanding of the communication method provided in the embodiments of this application, the following first describes several basic concepts used in the embodiments of this application.

### 1. Duplication (duplication) transmission

In a wireless communications system, a link in a direction from a terminal device to a radio access network device is referred to as an uplink, and a link in a direction from the radio access network device to the terminal device is referred to as a downlink. Specifically, data is transmitted on the uplink and the downlink between the terminal device and the radio access network device based on protocol layers defined by the 3GPP organization. For example, control signaling or service data is transmitted. The protocol layers defined by the 3GPP organization may include a PHY layer, a MAC layer, an RLC layer, a PDCP layer, an SDAP layer, an RRC layer, and the like. Data transmitted at whichever layer is finally carried at the physical layer and transmitted over a radio interface.

For one RB, a transmission mode in which a PDCP entity corresponding to the RB transmits same PDCP data to a plurality of RLC entities for duplication transmission is referred to as a duplication transmission mode. In the duplication transmission mode, the same piece of data may be repeatedly transmitted over the radio interface, so that stability of data transmission is improved. Generally, a data packet has a sequence number. During duplication transmission, the terminal device (or the RAN device) transmits, on a plurality of radio links, data packets having a same sequence number, and the peer RAN device (or the terminal device) performs duplication detection after receiving the data packets. Duplication detection is to detect a plurality of received data packets to check whether the data packets are the same, that is, whether the data packets are duplicate data packets.

It should be understood that, for PDCP data duplication transmission, in an existing protocol, it is only specified that a RAN device or a CU configured with a PDCP entity and a terminal device perform duplication detection after receiving a data packet, and a function of duplication detection is not provided for a RAN device or a CU not configured with a PDCP entity. In a communication method provided in the embodiments of this application, how a RAN device or a CU not configured with a PDCP entity performs data packet duplication detection is described in detail. Details are not described herein.

### 2. Activation/Deactivation of duplication transmission

For duplication transmission of uplink data, a master node and/or a secondary node may activate (activate) or deactivate (deactivate), by transmitting MAC layer signaling (for example, a MAC control element (control element, CE)), duplication transmission for the terminal device to transmit uplink data to a RAN node. For example, when quality of a radio link between the master node and the terminal device is relatively good, the master node may transmit media access control control element (Media access control-control element, MAC CE) signaling to the terminal device to deactivate duplication transmission, that is, indicate that the terminal device does not need to transmit uplink data packets having a same sequence number on a radio link connected to the secondary node. Similarly, when quality of the radio link between the secondary node and the terminal device is relatively good, the secondary node may also transmit MAC CE signaling to the terminal device to deactivate duplication transmission, that is, indicate that the terminal device does not need to transmit uplink data packets having a same sequence number on the radio link connected to the master node. When duplication transmission is not activated or deactivated, and quality of the radio link between the master node and the terminal device is relatively poor, the master node may transmit MAC CE signaling to the terminal device to activate duplication transmission, that is, indicate that the terminal device needs to transmit uplink data packets having a same sequence number on the radio link connected to the secondary node. Similarly, when quality of the radio link between the secondary node and the terminal device is relatively poor, the secondary node may also transmit MAC CE signaling to the terminal device to activate duplication transmission, that is, indicate that the terminal device needs to transmit uplink data packets having a same sequence number on the radio link connected to the master node. It can be learned that each RAN node determines, based on a status of a radio link between the RAN node and the terminal device, to activate/deactivate duplication transmission.

It should be understood that, in the existing protocol, a maximum quantity of communication channels between the terminal device and the radio access network device is two, and a transmit end node uses one bit to instruct a receive end node whether to enable a duplication transmission function. If the duplication transmission function is enabled, the receive end node may transmit a duplication transmission activation/deactivation command to the terminal device. The existing protocol does not specify how the transmit end node indicates a status of a channel established by the receive end node. In the embodiments of this application, a solution is provided, so that a transmit end node can indicate, by using indication information, a status of a channel established on a receive end node.

### 3. Data

Data used in this application includes signaling data and service data. The service data includes eMBB data, mMTC data, URLLC data, and the like. In time domain and frequency domain at the physical layer, duration occupied by one transmission time unit and a frequency width occupied by one transmission frequency unit may vary according to different wireless communication requirements of different data, and the wireless communications system may implement, by using a radio parameter configuration, requirements for a size of the transmission time unit and a size of the transmission frequency unit used for data transmission. The radio parameter configuration is referred to as a numerology parameter or an air interface format in 5G.

### 4. Radio bearer

At least one RB is established between the terminal device and the radio access network device to transmit the foregoing data. Corresponding to the foregoing data classification, the radio bearer is classified into two types: a signaling radio bearer used to transmit signaling data and a data radio bearer used to transmit service data. Establishing a radio bearer may be understood as configuring a set of protocol layer entities, that is, one bearer includes a set of protocol layer entities. For example, it is specified in the existing protocol that a set of functional entities of a same radio bearer in the foregoing duplication transmission includes: one PDCP entity, two RLC entities corresponding to the PDCP entity, at least one MAC entity corresponding to the two RLC entities, and at least one PHY entity corresponding to the at least one MAC entity.

In the existing protocol, when a data radio bearer used to transmit service data or a signaling radio bearer used to transmit signaling data is established between the terminal device and the radio access network device for PDCP data duplication transmission, the radio access network device needs to be configured as follows: two logical channels, two RLC entities corresponding to the two logical channels, an initial status of PDCP data duplication transmission of the bearer, and a cell group and a logical channel in which a primary RLC entity that performs PDCP data duplication transmission is located.

For the signaling radio bearer used to transmit signaling data, only an RRC entity can control whether to enable a status of PDCP data duplication transmission. When PDCP data duplication transmission is activated, the PDCP layer transmits same PDCP data by using the two RLC entities corresponding to the two logical channels.

For the data radio bearer used to transmit service data, the radio access network device activates or deactivates PDCP data duplication transmission on one RB by using one bit in a MAC CE.

### 5. Channel

The channel used in this application is a channel for transmitting data between the terminal device and the radio access network device. For example, on a transmit end device, because a same PDCP entity corresponds to two RLC entities, each RLC entity corresponds to one channel to transmit data. Correspondingly, a same PDCP entity on a receive end device corresponds to two RLC entities, and each RLC entity corresponds to one channel to receive data. Therefore, there are two channels correspondingly on the radio bearer between the transmit end device and the receive end device.

In a radio bearer, because one RLC entity corresponds to one channel in duplication transmission, a logical channel identifier of an RLC entity may be used to indicate the channel, or an identifier of the channel may be used to indicate a corresponding RLC entity. A channel of a radio bearer may also be referred to as a leg (leg).

Optionally, one radio bearer corresponds to a plurality of channels, that is, one radio bearer corresponds to a plurality of RLC entities and a plurality of logical channels, and different logical channel identifiers or identifiers corresponding to different RLC entities are respectively used to identify different channels. The plurality of logical channels may belong to a same logical channel group, or may belong to different logical channel groups. If a plurality of channels in one radio bearer are on different devices, for example, if one channel is on a master node and one channel is on a secondary node, identifiers of the plurality of logical channels are not limited, and may be the same or different.

Optionally, if a plurality of channels in one radio bearer correspond to a same logical channel and have a same logical channel identifier, the radio bearer corresponds to one logical channel. In this case, to distinguish between different channels, a same logical channel identifier and different channel identifiers may be used to identify one channel.

### 6. Primary RLC entity and secondary RLC entity

Each of the transmit end device and the receive end device corresponding to the channel includes one PDCP entity, a first RLC entity corresponding to the PDCP entity, and a second RLC entity corresponding to the PDCP entity. It is assumed that the first RLC entity corresponds to a first channel and that the second RLC entity corresponds to a second channel. The transmit end device transmits data on the first channel to the receive end device in a cell #1b or a cell group #1 corresponding to the first channel, and the receive end device receives, in the cell #1b or the cell group #1 corresponding to the first channel, the data on the first channel transmitted by the transmit end device; and the transmit end device transmits data on the second channel to the receive end device in a cell #2b or a cell group #2 corresponding to the second channel, and the receive end device receives the data on the second channel in the cell #2b or the cell group #2 corresponding to the second channel. In PDCP data duplication transmission mode, data from the same PDCP entity is duplicated on the second RLC entity of the transmit end device and the first RLC entity of the transmit end device, so that stability of data transmitted by the transmit end device can be improved. The network device may indicate that an RLC entity corresponding to one logical channel in one carrier group is the first RLC entity, that is, a primary RLC entity, and the second RLC entity is a secondary RLC entity.

Optionally, in a carrier aggregation scenario, the cell group # 1 is a master cell group, and the master cell group includes one primary cell and at least one secondary cell. For example, the master cell group includes a cell #1a (primary cell), a cell #1b, and a cell #1c. The cell group # 2 is a secondary cell group, and the secondary cell group includes at least one secondary cell. For example, the secondary cell group includes a cell #2a, a cell #2b, and a cell #2c. The master cell group corresponds to the first RLC entity and the first channel. In this case, the first RLC entity is also referred to as a primary RLC entity; and the second RLC entity is also referred to as a secondary RLC entity. When PDCP data duplication is deactivated, the terminal transmits data only on the primary RLC entity.

When the carrier aggregation scenario is a scenario of carrier aggregation across radio access network devices, a radio access network device belonging to the master cell group is a primary radio access network device, and a radio access network device belonging to the secondary cell group is a secondary radio access network device. The terminal device is served by both the primary radio access network device and the secondary radio access network device. Optionally, the terminal device may separately establish connections to the primary radio access network device and the secondary radio access network device by using two MAC layer entities. In specific implementation of this scenario, the PDCP entity and the first RLC entity corresponding to the PDCP are located on the primary radio access network device, and the second RLC entity corresponding to the PDCP entity is located on the secondary radio access network device; or the PDCP entity and the second RLC entity corresponding to the PDCP entity are located on the primary radio access network device, and the first RLC entity corresponding to the PDCP entity is located on the secondary radio access network device. It should be understood that the same PDCP entity corresponds to only one primary RLC entity, and that the PDCP entity corresponds to at least one secondary RLC entity. A channel corresponding to the primary RLC entity is referred to as a primary channel, and a channel corresponding to the secondary RLC entity is referred to as a secondary channel. When PDCP data duplication transmission is deactivated, and the terminal device determines that a data volume of to-be-transmitted data of the PDCP entity and the RLC entity in initial transmission are less than a first threshold, the terminal device performs transmission only on the primary RLC entity. When determining that the data volume of the to-be-transmitted data is greater than or equal to the first threshold, the terminal device may transmit different data by using the first RLC entity and the second RLC entity.

### 7. Tunnel

The terminal device performs wireless communication simultaneously with two RAN devices (for example, the RAN device 140 and the RAN device 142 in FIG. 1). The two RAN devices may use a same radio access technology (radio access technology, RAT). For example, both use NR. Alternatively, the two RAN devices may use different RATs. For example, one RAN device uses an LTE technology, and the other RAN device uses an NR technology. Each RAN device manages its own cell group, and each cell group includes at least one cell. FIG. 3 is a schematic diagram of a user plane L2 protocol stack of a RAN device in dual connectivity. For a DRB, if a RAN device corresponding to a CG1 is configured with a PDCP entity corresponding to the DRB, the RAN device is referred to as a RAN device that hosts (host) the PDCP entity, or a RAN device hosting (hosting) the PDCP entity. A RAN device corresponding to a CG2 is not configured with a PDCP entity corresponding to the DRB. Generally, a RAN device hosting a PDCP entity is referred to as a hosting PDCP entity node or a PDCP entity hosting node, and a RAN device not configured with a PDCP entity is referred to as a corresponding (corresponding) node. In addition, a user plane L2 of the RAN device corresponding to the CG1 further includes an RLC layer and a MAC layer. A user plane L2 of the RAN device corresponding to the CG2 includes an RLC layer and a MAC layer, but does not include a PDCP layer.

For example, for a DRB, a hosting PDCP entity node separately configures an RLC entity and a MAC entity for itself and a corresponding node, and the hosting PDCP entity node determines how to allocate downlink data of the DRB to the hosting PDCP entity node and the corresponding node for transmission. The hosting PDCP entity node may map one piece of PDCP data of the DRB to its own logical channel, and map a duplicate piece of PDCP data of the DRB to a logical channel of the corresponding node. MAC entities of the hosting PDCP entity node and the corresponding node separately schedule downlink data of their logical channels to radio links between the two nodes and the terminal device for transmission. During downlink data transmission, the hosting PDCP entity node transmits one piece of downlink data of the DRB to the terminal device; in addition, the hosting PDCP entity node transmits another part of downlink data of the DRB to the corresponding node by using a tunnel (tunnel) between the hosting PDCP entity node and the corresponding node, and the corresponding node transmits the duplicate piece of downlink data to the terminal device. During uplink data transmission, the terminal device transmits one piece of uplink data of the DRB to the hosting PDCP entity node; in addition, the terminal device transmits a duplicate piece of uplink data of the DRB to the corresponding node, and the corresponding node transmits the duplicate piece of uplink data to the hosting PDCP entity node. It should be noted that, in a process of establishing two connections, a tunnel is established between the hosting PDCP entity node and the corresponding node, so that data of the DRB can be transmitted between the two nodes.

For example, the hosting PDCP entity node transmits uplink tunnel information (that is, receive end point information of the hosting PDCP entity serving as a receive end point of the tunnel) to the corresponding node; and the corresponding node transmits downlink tunnel information (that is, receive end point information of the corresponding node serving as a receive end point of the tunnel) to the hosting PDCP entity node. For downlink data transmission, the hosting PDCP entity node transmits downlink data to the corresponding node based on the downlink tunnel information provided by the corresponding node. For uplink data transmission, the corresponding node transmits uplink data to the hosting PDCP entity node based on the uplink tunnel information provided by the hosting PDCP entity node. The uplink tunnel information may be at least one of an uplink tunnel transport layer address and a tunnel endpoint identifier (tunnel endpoint identifier, TEID) of the tunnel, an index of the tunnel, or an identifier (identifier or identity, ID) of the tunnel. Correspondingly, the downlink tunnel information may be at least one of a downlink tunnel transport layer address and a TEID of the tunnel, an index of the tunnel, or an identifier of the tunnel.

For PDCP data duplication transmission in a dual-connectivity scenario, for downlink PDCP data duplication transmission, the PDCP entity of the hosting PDCP entity node maps data packets having a same PDCP sequence number to logical channels of the hosting PDCP entity node and the corresponding node respectively, and MAC entities of the two nodes schedule the downlink data packets to their radio links for transmission to the terminal device. For uplink PDCP data duplication transmission, a PDCP entity of the terminal device maps data packets having a same PDCP sequence number to the logical channel between the terminal device and the hosting PDCP entity node or between the terminal device and the corresponding node respectively, and separately schedules, by using a MAC entity of the terminal device, the uplink data packets to the radio links corresponding to the logical channels and transmits the uplink data packets to the hosting PDCP entity node and the corresponding node.

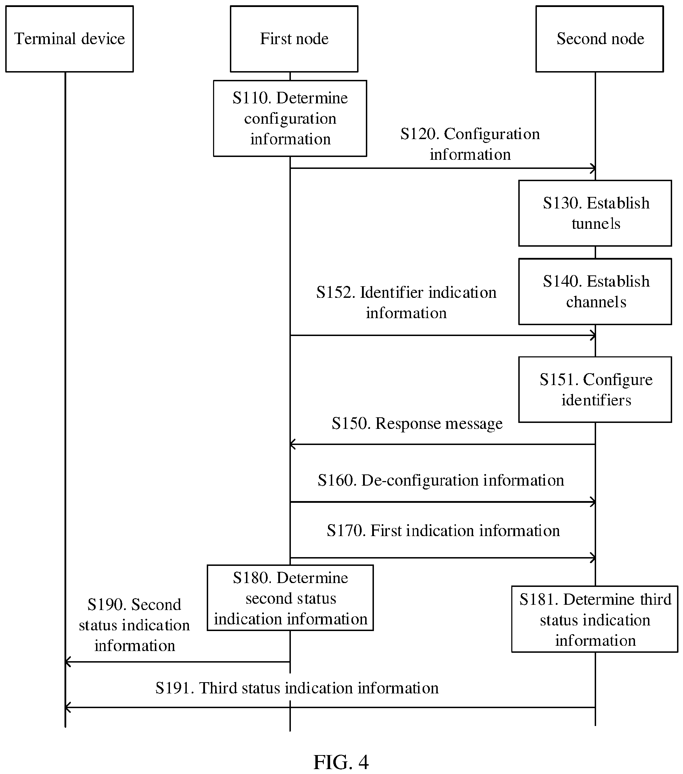

With reference to FIG. 1 and FIG. 2(a) and FIG. 2(b), the foregoing describes the scenarios to which the embodiments of this application can be applied and some basic concepts used in this application. With reference to FIG. 4 to FIG. 7, the following describes in detail the communication method provided in the embodiments of this application.

It should be understood that, in the embodiments of this application, duplication transmission configuration procedures are separately configured based on different radio bearers. For ease of description and understanding, in each embodiment of this application, a configuration of duplication transmission on one radio bearer is used as an example. For cases of other radio bearers, refer to the configuration of duplication transmission on the radio bearer provided in this application. It should be noted that the radio bearer used in the embodiments of this application may be a signaling radio bearer, or may be a data radio bearer.

FIG. 4 is a schematic flowchart of a communication method according to an embodiment of this application. A first node, a second node, a terminal device, and steps S110 to S190 are included.

In the embodiment shown in FIG. 4, the first node and the second node are collectively referred to as a network device. In the embodiment shown in FIG. 4, when one RB is established between the network device and the terminal device, the RB is used to transmit data (signaling data and/or service data) between the network device and the terminal device. Specifically, establishing an RB between the RAN device and the terminal device may be understood as: separately configuring a set of protocol layer entities on the network device and the terminal device, where the set of protocol layer entities serves the RB. In this application, functional entities corresponding to one RB include one PDCP entity, and more than two RLC entities corresponding to the PDCP entity, where the more than two RLC entities are in a one-to-one correspondence to more than two PDCP data duplication transmission channels configured between the network device and the terminal device, and the channel is used to transmit PDCP data between the terminal device and the network device.

The first node and the second node may be the foregoing RAN device, or may be the foregoing CU or DU. For example, the first node is the RAN device 140 shown in FIG. 1, and the second node is the RAN device 142 shown in FIG. 1. Alternatively, the first node is the RAN device 142 shown in FIG. 1, and the second node is the RAN device 140 shown in FIG. 1. Alternatively, the first node is the CU shown in FIG. 2(a), and the second node is the DU shown in FIG. 2(a). Alternatively, the first node is the CU-UP and the CU-CP shown in FIG. 2(b), and the second node is the DU shown in FIG. 2(b).

Further, optionally, the first node is configured with the foregoing PDCP entity, and the second node is not configured with the foregoing PDCP entity. In this case, the first node is referred to as a hosting PDCP entity node, and the second node is referred to as a corresponding node. Optionally, the first node is not configured with the foregoing PDCP entity, and the second node is configured with the foregoing PDCP entity. In this case, the second node is referred to as a hosting PDCP entity node, and the first node is referred to as a corresponding node. Optionally, the first node is configured with the foregoing PDCP entity and at least one of more than two RLC entities corresponding to the PDCP entity, and the second node is configured with an RLC entity other than the at least one RLC entity configured on the first node among the more than two RLC entities corresponding to the PDCP entity. Optionally, the first node is configured with the foregoing PDCP entity and a plurality of RLC entities corresponding to the PDCP entity. Optionally, the first node is configured with the foregoing PDCP entity but no RLC entity corresponding to the PDCP entity, and the second node is configured with a plurality of RLC entities corresponding to the PDCP entity.

Optionally, the second node is configured with the foregoing PDCP entity and at least one of RLC entities corresponding to the PDCP entity, and the first node is configured with an RLC entity other than the at least one RLC entity configured on the first node among the RLC entities corresponding to the PDCP entity. Optionally, the second node is configured with the foregoing PDCP entity and an RLC entity corresponding to the PDCP entity. Optionally, the second node is configured with the foregoing PDCP entity but no RLC entity corresponding to the PDCP entity, and the first node is configured with an RLC entity corresponding to the PDCP entity.

The foregoing possible forms of the first node and the second node are merely examples, and cannot limit the protection scope of this application. It should be understood that this application is limited only to a case in which there is a requirement for establishing a tunnel for transmitting PDCP data between the first node and the second node. Specifically, because requirements for transmitting PDCP data by using a tunnel cannot be all listed exhaustively, specific forms of the first node and the second node are not limited in this application, and details are not described.

It should be understood that, in addition to the foregoing PDCP entity and the more than two RLC entities corresponding to the PDCP entity, the functional entities corresponding to the foregoing RB processing further include at least one MAC entity corresponding to the more than two RLC entities and at least one PHY entity corresponding to the at least one MAC entity. This application mainly relates to how to exchange a tunnel and/or channel configuration between nodes, that is, a configuration of RLC entities in a one-to-one correspondence to channels is mainly considered in this application. Therefore, the foregoing describes only the protocol layer entities corresponding to the RB established between the network device and the terminal device in this application, including the PDCP entity and the plurality of RLC entities corresponding to the PDCP entity.

It should also be understood that, for one RB, RLC entities among protocol layer entities corresponding to the RB are in a one-to-one correspondence to channels established between the network device and the terminal device. Therefore, configuring an RLC entity in this application may be understood as configuring a channel corresponding to the RLC entity. For example, when whether an RLC entity is activated is configured, the RLC entity may be in an activated state, and an LCH and a channel corresponding to the RLC entity are also in an activated state. For another example, when an RLC entity is removed, an LCH and a channel corresponding to the RLC entity are also removed.

It should also be understood that "first", "second", and the like in this application are merely used to distinguish between similar objects, but are not used to describe a specific order or sequence. For example, the first node and the second node are merely used to distinguish between different nodes. It should be understood that the objects distinguished in this manner may be interchanged in appropriate circumstances, so that the solution described in this embodiment of this application can be implemented in a manner other than those illustrated or described in the application document.

S110. The first node determines configuration information.

Specifically, the configuration information is used to instruct the second node to establish N tunnels, and N is an integer greater than or equal to 2. The plurality of tunnels are used to transmit PDCP data or RLC data between the first node and the second node. For example, the first node transmits the PDCP data to the second node by using the plurality of tunnels, and the second node receives the PDCP data by using the plurality of tunnels; or the second node transmits the PDCP data to the first node by using the plurality of tunnels, and the first node receives the PDCP data by using the plurality of tunnels. Specifically, the first node and the second node encapsulate to-be-transmitted PDCP data or RLC data into a GPRS tunneling protocol (GPRS tunnelling protocol, GTP) data packet, add source tunnel port information and destination tunnel port information of a tunnel to the data packet, and then transmit the data packet by using the tunnel.

It may be understood that when data is transmitted from a hosting PDCP entity node to a corresponding node, the data is referred to as PDCP data, and that when data is transmitted from the corresponding node to the hosting PDCP entity node, the data is referred to as RLC data.

In this application, the PDCP data may also be referred to as a PDCP PDU, and the RLC data may also be referred to as an RLC service data unit (service data unit, SDU).

It should be understood that, for PDCP data duplication transmission in a DC case in an existing protocol, a quantity of tunnels established between a first node and a second node is one. In other words, in comparison with duplication transmission in the existing protocol, the method shown in FIG. 4 can improve reliability of data transmission between the first node and the second node. Particularly, when transmission is performed between the first node and the second node by using a radio link, multi-tunnel data transmission can effectively improve reliability of transmission.

Further, after the first node determines the configuration information, S120 is performed: The first node transmits the configuration information to the second node.

It should be understood that, in the method procedure shown in FIG. 4, because the first node transmits the configuration information to the second node, in this scenario, it may be understood that the first node is a master node (main RAN or CU), that is, a connection is established between the first node and an AMF in a core network; and the second node is a secondary node (supplement RAN or DU). The configuration information includes information about the foregoing RB and address information of the N tunnels.

Specifically, after receiving the configuration information, the second node needs to establish tunnels based on the configuration information. To be specific, the method shown in FIG. 4 further includes S130: The second node establishes tunnels.

For example, the configuration information may be an information list formed by at least two pieces of uplink tunnel information, as shown in Table 1.

**Table 1**

| Uplink tunnel | Uplink tunnel information | |
|---|---|---|
| Uplink tunnel #1 | IP address of the first node | TEID of an uplink tunnel #1 |
| Uplink tunnel #2 | IP address of the first node | TEID of an uplink tunnel #2 |
| ... | ... | ... |

One piece of uplink tunnel information may be an Internet protocol (internet protocol, IP) address (address) of a device (the first node) that transmits the uplink tunnel information and at least one of the following parameters: a tunnel endpoint identifier (tunnel endpoint identifier, TEID) of the uplink tunnel, an index of the uplink tunnel, and an identifier (identifier or identity, ID) of the uplink tunnel. The establishing tunnels based on the configuration information after the second node receives the configuration information may be allocating, based on the plurality of pieces of uplink tunnel information, a plurality of pieces of downlink tunnel information corresponding to the plurality of pieces of uplink tunnel information. Specifically, each of the plurality of pieces of downlink tunnel information may be an IP address of the second node and at least one of the following parameters: a TEID of the downlink tunnel, an index of the downlink tunnel, an identifier of the downlink tunnel, and the like. Details are not described herein.

For example, when the first node is the master node but the first node is not configured with the PDCP entity corresponding to the RB, the configuration information may be an information list formed by at least two pieces of downlink tunnel information, as shown in Table 2.

**Table 2**

| Downlink tunnel | Downlink tunnel information | |
|---|---|---|
| Downlink tunnel #1 | IP address of the first node | TEID of a downlink tunnel #1 |
| Downlink tunnel #2 | IP address of the first node | TEID of a downlink tunnel #2 |
| ... | ... | ... |

Likewise, one piece of downlink tunnel information may be an IP address of a device (the first node) that transmits the downlink tunnel information and at least one of the following parameters: a tunnel endpoint identifier TEID of the downlink tunnel, an index of the downlink tunnel, or an identifier of the downlink tunnel. The establishing tunnels based on the configuration information after the second node receives the configuration information may be allocating, based on the at least two pieces of downlink tunnel information, at least two pieces of uplink tunnel information corresponding to the at least two pieces of downlink tunnel information. Specifically, each of the at least two pieces of uplink tunnel information may be the IP address of the second node and at least one of the following parameters: a TEID of the uplink tunnel, an index of the uplink tunnel, an identifier of the uplink tunnel, and the like. Details are not described herein.

It should be understood that the tunnels are only used to transmit PDCP data or RLC data between the first node and the second node. When PDCP data or RLC data needs to be transmitted between the second node and the terminal device, channels need to be established between the second node and the terminal device.

Therefore, further, the second node further needs to establish channels with the terminal device for transmitting PDCP data or RLC data. To be specific, the method shown in FIG. 4 further includes S140: The second node establishes channels. In the communication method provided in this embodiment of this application, because channels are in a one-to-one correspondence to the RLC entities of the RB, establishing a channel by the second node may be understood as establishing, by the second node, an RLC entity corresponding to the channel, and the following two cases are included:

### Case 1:

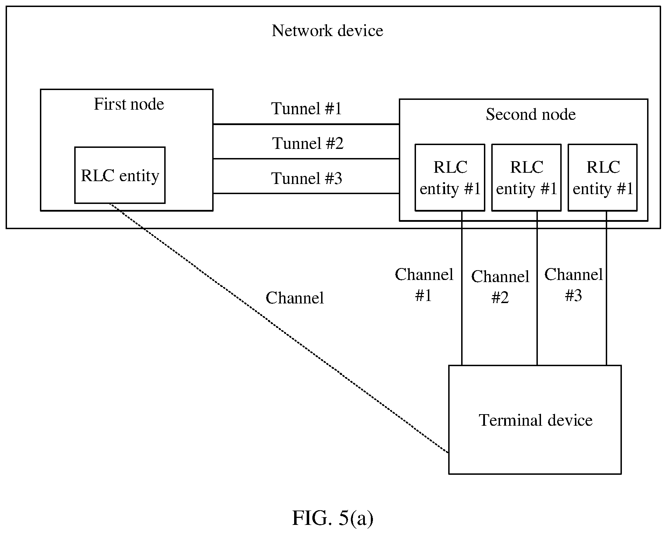

The second node establishes RLC entities based on the configuration information. Specifically, a quantity of RLC entities established by the secondary node is equal to a quantity of tunnels established by the secondary node and is also N. For example, the configuration information instructs the second node to establish three tunnels (tunnel #1 to tunnel #3 shown in FIG. 5(a)). The second node can establish three RLC entities (RLC entity #1 to RLC entity #3 shown in FIG. 5(a)) based on the configuration information. Because the RLC entities are in a one-to-one correspondence to the channels, it may be understood that in this case, a quantity of tunnels between the second node and the first node is equal to a quantity of channels between the second node and the terminal device (channel # 1 to channel # 3 shown in FIG. 5(a)), as shown in FIG. 5(a). FIG. 5(a) to FIG. 5(d) are schematic diagrams of transmission modes of PDCP data or RLC data between the first node, the second node, and the terminal device according to an embodiment of this application.

It should be understood that, the case 1 only represents that the quantity of tunnels between the first node and the second node that are established by the secondary node based on the configuration information is equal to the quantity of channels between the second node and the terminal device that are established by the secondary node based on the configuration information. However, there is no correspondence between the tunnels and the channels except that their quantities are equal. For example, it cannot be understood that there is a correspondence between the tunnel #1 and the channel #1 (or the RLC entity #1) in FIG. 5(a).

### Case 2:

A quantity of channels between the second node and the terminal device that are established by the secondary node is irrelevant to a quantity of tunnels between the second node and the first node that are established by the secondary node. In the case 2, the configuration information transmitted by the first node to the second node further includes channel quantity indication information. In a possible implementation, the channel quantity indication information is used to instruct the second node to establish M RLC entities, where M is a positive integer.

Generally, reliability of data transmission between the first node and the second node is relatively high. In other words, it is not necessary to establish more than two tunnels between the first node and the second node, and only two tunnels need to be established. For example, the quantity of tunnels established by the secondary node is 2, but the quantity of established channels is not necessarily 2.

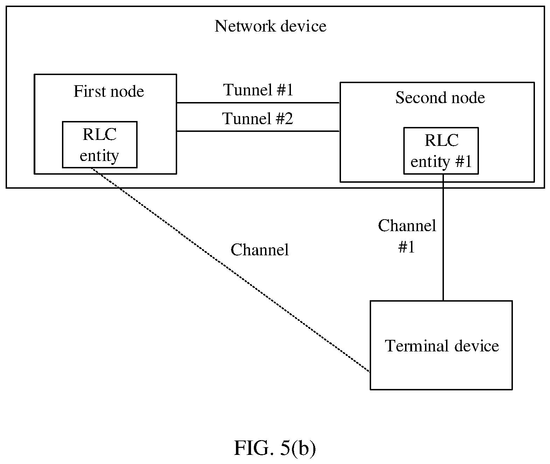

For example, the channel quantity indication information instructs the second node to establish one RLC entity, that is, there are two tunnels between the first node and the second node, and there is one channel between the second node and the terminal device, as shown in FIG. 5(b).

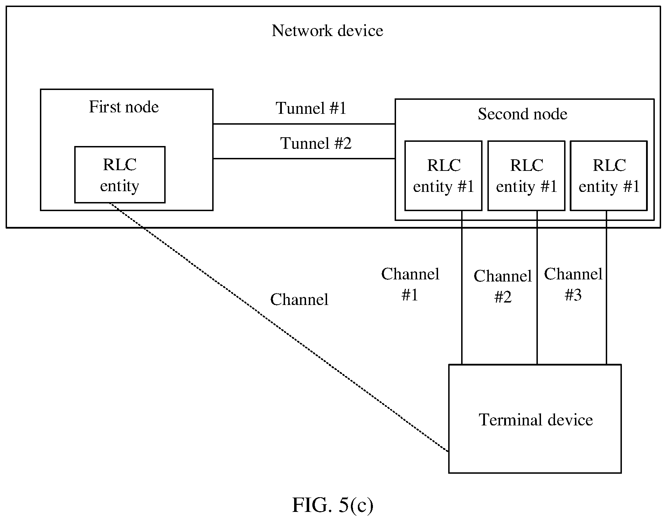

In another possible implementation, the quantity of RLC entities that the channel quantity indication information instructs the second node to establish is greater than the quantity of tunnels established by the secondary node, and the quantity of RLC entities established by the secondary node is equal to the quantity of tunnels established by the secondary node plus the quantity indicated by the channel quantity indication information. For example, the quantity of RLC entities that the channel quantity indication information instructs the secondary node to establish is one more than the quantity of tunnels established by the secondary node, that is, the quantity of tunnels between the first node and the second node is two, and the quantity of channels between the second node and the terminal device is three, as shown in FIG. 5(c).

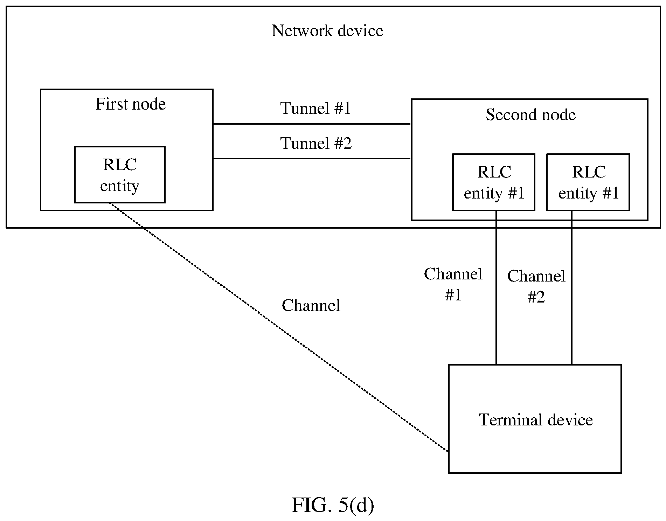

In still another possible implementation, the quantity of RLC entities that the channel quantity indication information instructs the second node to establish is a larger one of the quantity of tunnels established by the secondary node and the quantity indicated by the channel quantity indication information. For example, if a value indicated by the channel quantity indication information is 1, and there are two tunnels between the first node and the second node, there are two channels between the second node and the terminal device, as shown in FIG. 5(d). Optionally, the quantity of RLC entities established by the secondary node is equal to a quantity indicated by a smaller one of the quantity of tunnels established by the secondary node and the quantity indicated by the channel quantity indication information.

It should be understood that the foregoing three possible indication forms of the channel quantity indication information are merely examples, and do not constitute any limitation on the protection scope of this application. In other words, in the case 2, the quantity of RLC entities established by the secondary node is no longer necessarily equal to the quantity of tunnels established by the secondary node in the case 1. Instead, the quantity of channels established by the secondary node is indicated by the channel quantity indication information explicitly or implicitly.

A procedure in which the first node instructs the second node to establish tunnels and channels is mainly described in S110 to S140. After the procedure, the method procedure shown in FIG. 4 may further include S 150: The second node transmits a response message to the first node, where the response message includes each piece of downlink or uplink tunnel information allocated by the second node (when the second node receives uplink tunnel information, the response message includes downlink tunnel information; or when the second node receives downlink tunnel information, the response message includes uplink tunnel information). Further, the response message further includes an identifier allocated by the second node and corresponding to each RLC entity, and the identifier corresponding to the RLC entity is at least one of the following plurality of items: an identifier of the RLC entity, an LCH identifier of an LCH of the RLC entity, a tunnel identifier of a tunnel corresponding to the RLC entity, and a channel identifier of a channel corresponding to the RLC entity. Further, to avoid a case in which an identifier corresponding to an RLC entity established on the first node conflicts with an identifier corresponding to an RLC entity established on the second node, the identifier corresponding to the RLC entity established on the second node is different from the identifier corresponding to the RLC entity established on the first node. In other words, before the second node performs S150, the method procedure shown in FIG. 4 further includes S151: The second node configures identifiers corresponding to the RLC entities established by the secondary node.

Specifically, after the second node establishes the RLC entities, the second node configures a corresponding identifier for each RLC entity established by the secondary node. For example, the second node establishes three RLC entities based on the foregoing configuration information, and configures an identifier for each of the three RLC entities: an RLC entity # 1, an RLC entity # 2, and an RLC entity # 3.

It should be understood that, in a possible embodiment, a channel for transmitting PDCP data is set between the first node and the terminal device, that is, an RLC entity corresponding to the channel is configured on the first node; and a channel for transmitting PDCP data is set between the second node and the terminal device, that is, an RLC entity corresponding to the channel is configured on the second node. When the first node and the second node transmit status indication information to the terminal device to indicate whether the RLC entities established on the first node and the second node are activated, duplication of identifiers corresponding to the RLC entities established on the first node and the second node needs to be avoided, so that the terminal device can accurately learn whether each RLC entity is activated.

Further, to implement a case in which no conflict exists between the identifiers corresponding to the RLC entities established by the first node and the second node, before the second node performs S151, the method procedure shown in FIG. 4 further includes S152: The first node transmits identifier indication information to the second node, where the identifier indication information is used to indicate an identifier corresponding to an RLC entity established on the first node for one RB.

Specifically, the first node transmits, to the second node, the identifier corresponding to the RLC entity established on the first node, and the identifier corresponding to the RLC entity established on the first node is used to instruct the second node to avoid using the same identifier to identify an RLC entity established on the second node.

For example, if an RLC entity is established on the first node, and an identifier configured by the first node for the RLC entity is an RLC entity #1, in the RLC entity established by the secondary node, the second node can no longer use the RLC entity #1 as an identifier corresponding to the RLC entity established by the secondary node.

For example, an identifier corresponding to each RLC entity established by the secondary node may be an identifier (identity, ID) of an LCH corresponding to the RLC entity.

For example, the identifier corresponding to each RLC entity established by the secondary node may be an RLC entity identifier configured by the second node for the RLC entity.

For example, when the quantity of tunnels established by the secondary node is equal to the quantity of RLC entities established by the secondary node, an identifier corresponding to one RLC entity established by the secondary node may further correspond to an identifier of one tunnel established by the second node.

For example, three tunnels are established by the secondary node, and identifiers of the tunnels are respectively a tunnel #1, a tunnel #2, and a tunnel #3. When the quantity of RLC entities established by the secondary node is equal to the quantity of tunnels established by the secondary node and is also 3, the second node may use the tunnel #1, the tunnel #2, and the tunnel #3 as identifiers corresponding to the three RLC entities respectively.

After S150 is performed, the first node can determine, based on the response message, the identifier corresponding to each RLC entity on the second node.

It can be learned from the foregoing S150, S151, and S152 that an implementation result of the three steps is that the first node can determine an identifier corresponding to each of all the RLC entities established on the first node and the second node. In an actual application process of the method procedure shown in FIG. 4, that the first node can determine, by performing the foregoing S150, S151, and S152, the identifier corresponding to each of all the RLC entities established on the first node and the second node, is only a possible implementation, and does not constitute any limitation on the protection scope of this application. For example, after S151 and S152 are performed, that is, after the second node learns the identifiers corresponding to the RLC entities established by the first node and the identifiers corresponding to the RLC entities established by the secondary node, the second node can also determine the identifier corresponding to each of all the RLC entities established on the first node and the second node. In other words, in the embodiment shown in FIG. 4, the first node and the second node have similar functions.

Optionally, the method procedure shown in FIG. 4 further includes S160: The first node transmits de-configuration information to the second node, where the de-configuration information is used to instruct the second node to remove at least one RLC entity.

In a possible implementation, after S150 is performed, the first node learns the identifier corresponding to each RLC entity established on the second node. Further, the de-configuration information transmitted by the first node to the second node may include an identifier corresponding to each of the at least one RLC entity that needs to be removed by the second node. In this case, after receiving the de-configuration information, the second node removes, based on the identifier corresponding to each of the at least one RLC entity, the at least one RLC entity among the RLC entities established on the second node.

For example, three RLC entities are established on the second node, and identifiers configured by the second node for the three RLC entities are an RLC entity #1, an RLC entity #2, and an RLC entity #3 respectively. After S150 is performed, the first node learns the quantity of RLC entities established by the secondary node and the identifier corresponding to each RLC entity established by the secondary node. When the de-configuration information transmitted by the first node to the second node includes the RLC entity #1 and the RLC entity #2, the second node removes, based on the de-configuration information, the RLC entities identified as the RLC entity #1 and the RLC entity # 2 among the three established RLC entities.

In another possible implementation, the de-configuration information includes a first value, and the first value indicates a quantity of RLC entities to be removed by the second node. In this case, after receiving the de-configuration information, the second node removes, from the established plurality of RLC entities based on the first value, a quantity of RLC entities equal to the first value.

For example, three RLC entities are established on the second node. When the first value included in the de-configuration information transmitted by the first node to the second node is 2, the second node removes two RLC entities from the three established RLC entities based on the de-configuration information. Specifically, which two RLC entities are removed by the second node may depend on specific implementation of the second node, and is not specifically limited herein.

In still another possible implementation, the de-configuration information is only a type of trigger information, and the de-configuration information does not carry a quantity of RLC entities or an identifier of an RLC entity that the second node needs to remove. After receiving the de-configuration information, the second node removes RLC entities among all the RLC entities established by the secondary node except a primary RLC entity (if the second node is configured with the primary RLC entity). The primary RLC entity is an RLC entity configured by the network device for the terminal device and corresponding to one logical channel reserved for data transmission after PDCP data duplication transmission is deactivated in a CA scenario. Alternatively, the primary RLC entity is an RLC entity configured by the network device for the terminal device and corresponding to one logical channel for data transmission after PDCP duplication transmission is deactivated in a DC scenario when a data volume of to-be-transmitted PDCP data and RLC data in initial transmission is less than a preconfigured threshold.

For example, three RLC entities are established on the second node, and one RLC entity is the primary RLC entity. When the first node transmits the de-configuration information to the second node, the second node removes, based on the de-configuration information, two RLC entities among the three established RLC entities except the primary RLC entity.

It should be understood that a reason why the first node transmits the foregoing de-configuration information to the second node is not limited in this application. For example, the first node may transmit the de-configuration information to the second node when the first node determines that quality of a channel for transmitting PDCP data between the first node and the terminal device is relatively good and that there is no need to establish a plurality of RLC entities on the second node.

It should be understood that the foregoing S110 to S140 merely indicate that the first node can instruct the second node to establish a plurality of tunnels and at least one RLC entity, but do not define that a channel corresponding to each established RLC entity should be used for PDCP data duplication transmission. S160 also describes that even if a plurality of RLC entities are established, the first node can instruct the second node to remove some or all of the RLC entities. Similarly, the first node may also indicate a quantity of RLC entities that can be in the activated state among the RLC entities established by the secondary node. Optionally, the method procedure shown in FIG. 4 further includes S170: The first node transmits first indication information to the second node, where the first indication information indicates a quantity of RLC entities allowed to be activated on the second node.

In a possible implementation, the first indication information includes a second value, and the second value is a value of the quantity of RLC entities allowed to be activated on the second node.

For example, three RLC entities are established on the second node. When the second value included in the first indication information transmitted by the first node to the second node is 2, the second node activates any two of the three established RLC entities based on the first indication information.

In a possible implementation, the first indication information includes a third value, and the third value is a value of a quantity of initially activated tunnels among the N tunnels. The value of the quantity is used by the first node to indicate a value of the quantity of RLC entities allowed to be activated on the second node.

For example, if the first node instructs the second node to establish three tunnels for duplication transmission, and the first node indicates that two of the three tunnels are initially in the activated state, the second node determines that a maximum quantity of activated RLC entities is also 2.

It should be understood that, in this application, a maximum quantity of RLC entities allowed to be activated on the second node may be indicated by the first node, or may be specified in a protocol. Alternatively, the first indication information may be included in the configuration information, and does not need to be separately transmitted to the second node.

For example, three RLC entities are established on the second node, and the protocol specifies that when a maximum quantity of RLC entities allowed to be activated on the second node is 2, the second node should activate two of the three established RLC entities. Specifically, which two RLC entities are activated by the second node may depend on specific implementation of the second node, and is not specifically limited herein.

Further, the first node may not only indicate the quantity of RLC entities that can be in the activated state among the RLC entities established by the secondary node, but also indicate an initial state (for example, an activated state or a deactivated state) of each of the RLC entities established by the secondary node. Optionally, the configuration information includes second indication information, and the second indication information is used to indicate the initial state of each RLC entity established by the secondary node.

In a possible implementation, the second indication information is only one type of trigger information, and the second indication information does not carry a quantity of RLC entities that are initially in the activated state on the second node or an identifier of an RLC entity that is initially in the activated state on the second node. After receiving the second indication information, the second node determines that each RLC entity established by the secondary node is initially in the activated state.

For example, three RLC entities are established on the second node. When the configuration information transmitted by the first node to the second node includes the second indication information, the second node determines that all the three established RLC entities are initially in the activated state.

In another possible implementation, the second indication information includes a fourth value, and the fourth value is a quantity of RLC entities that are initially in the activated state among the RLC entities established by the secondary node.

For example, three RLC entities are established on the second node. When the fourth value included in the second indication information transmitted by the first node to the second node is 2, the second node activates two of the three established RLC entities based on the second indication information. Specifically, which two RLC entities are activated by the second node may depend on specific implementation of the second node, and is not specifically limited herein.

In still another possible implementation, the second indication information indicates that a duplication transmission mode of the RB is in the activated state, and the duplication transmission mode indicates that a same piece of PDCP data of the RB is transmitted by using a plurality of RLC entities.

After receiving the second indication information, the second node determines that the second node may control a PDCP duplication transmission status of the RB by using an activation or deactivation command.

For example, three RLC entities are established on the second node. When the configuration information transmitted by the first node to the second node includes the second indication information, the second node transmits a PDCP duplication transmission activation or deactivation command to control whether to activate the three RLC entities on the node. Alternatively, the second node transmits a PDCP duplication transmission activation or deactivation command to control whether to activate all RLC entities corresponding to the RB, including whether to activate all the RLC entities on the first node and the second node. Certainly, if an RLC entity is a primary RLC, the primary RLC entity is activated by default, does not need to be controlled by an activation/deactivation command, and can always transmit data.

In still another possible implementation, after the foregoing S150 is performed, the second indication information can explicitly indicate that at least one of the RLC entities established on the second node is in the activated state.

For example, three RLC entities are established on the second node, and identifiers configured by the second node for the three RLC entities are an RLC entity #1, an RLC entity #2, and an RLC entity #3 respectively. After S130 is performed, the first node learns the quantity of RLC entities established by the secondary node and the identifier corresponding to each RLC entity established by the secondary node. When the second indication information transmitted by the first node to the second node includes the RLC entity #1 and the RLC entity #2, the second node determines, based on the second indication information, that RLC entities identified as the RLC entity #1 and the RLC entity #2 among the three established RLC entities are initially in the activated state.

It should be understood that how the second node activates an RLC entity is not limited in this application. For example, a MAC layer duplication transmission activation command may be used.

Further, the second node may transmit whether each RLC entity is activated to the first node, so that the first node can learn whether each RLC entity on the second node is activated. For example, the response message transmitted by the second node to the first node in S150 further includes first status indication information, and the first status indication information is used to indicate whether each of the RLC entities established by the secondary node is activated. To be specific, the response message includes the identifiers corresponding to the RLC entities established by the secondary node, and whether the RLC entity corresponding to each identifier is activated. Optionally, the first node may determine second status indication information based on whether each RLC entity on the first node is activated and the first status indication information carried in the response message. To be specific, the method procedure shown in FIG. 4 may further include S180: The first node determines the second status indication information. Specifically, the second status indication information is used to indicate whether each of the more than two RLC entities corresponding to the PDCP entity is activated.

Alternatively, the second status indication information indicates whether the RLC entities established on the first node are activated. To be specific, the first node does not need to learn whether the RLC entities established on the second node are activated, and only needs to notify, by using the second status indication information, the terminal device whether the RLC entities established on the first node are activated. In this case, after receiving the second status indication information, the terminal device determines, based on the RLC entities associated with the MAC entity that receives the second status indication information, which RLC entity or which RLC entities is/are activated or not, as notified by the second status indication information.

Specifically, the first node may transmit the second status indication information to the terminal device by adding the second status indication information to RRC signaling or MAC CE signaling.

Likewise, the second node may obtain, based on whether each RLC entity on the second node is activated, whether an RLC entity established on the first node is activated. To be specific, the method procedure shown in FIG. 4 may further include S181: The second node determines third status indication information. Specifically, the third status indication information is used to indicate whether each of the more than two RLC entities corresponding to the PDCP entity is activated.

Alternatively, the third status indication information indicates whether the RLC entities established on the second node are activated. To be specific, the second node does not need to learn whether the RLC entities established on the first node are activated, and only needs to notify, by using the third status indication information, the terminal device whether the RLC entities established on the second node are activated. In this case, after receiving the third status indication information, the terminal device determines, based on the RLC entities associated with the MAC entity that receives the third status indication information, which RLC entity or which RLC entities is/are activated or not, as notified by the third status indication information.

Specifically, the second node may transmit the third status indication information to the terminal device by adding the third status indication information to RRC signaling or MAC CE signaling.

After S180 is performed, the method procedure shown in FIG. 4 may further include S190: The first node transmits the second status indication information to the terminal device.

After S181 is performed, the method procedure shown in FIG. 4 may further include S191: The second node transmits the third status indication information to the terminal device.

It may be understood that an occasion at which the first node transmits the second status indication information to the terminal device and/or the second node transmits the third status indication information to the terminal device is not limited, and may be any time after a first radio bearer is configured. After receiving the status indication information, the terminal device determines, based on an indicated activation bit value, to activate a duplication transmission function of a channel. In one or more of the following possible implementations, the first node and the second node may set whether all the RLC entities of the RB are activated; the first node and the second node set whether all the RLC entities of the RB except the primary RLC entity are activated; the first node only sets whether all the RLC entities of the RB on the first node or all the RLC entities except the primary RLC entity are activated; and the second node only sets whether all the RLC entities of the RB on the second node or the RLC entities except the primary RLC entity are activated.

For example, when the second status indication information indicates whether the RLC entities established on the first node are activated, the second status indication information includes a preset field, where one bit in the preset field is used to indicate whether an RLC entity established on the first node is activated, and in the preset field, positions of bits corresponding to the RLC entities established on the first node are sorted based on values of LCH identifiers of the RLC entities established on the first node; or status information included in an LCH configuration corresponding to each RLC entity established on the first node, where the status information indicates whether the corresponding RLC entity is activated.

For example, when the second status indication information indicates whether each of the more than two RLC entities corresponding to the PDCP entity is activated, the second status indication information includes a preset field, where one bit in the preset field is used to indicate whether an RLC entity established on the first node and an RLC entity established on the second node are activated, and in the preset field, positions of bits corresponding to the RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

Likewise, for example, when the third status indication information indicates whether the RLC entities established on the second node are activated, the third status indication information includes a preset field, where one bit in the preset field is used to indicate whether an RLC entity established on the second node is activated, and in the preset field, positions of bits corresponding to the RLC entities established on the second node are sorted based on values of LCH identifiers of the RLC entities established on the second node; or status information included in an LCH configuration corresponding to each RLC entity established on the second node, where the status information indicates whether the corresponding RLC entity is activated.

For example, when the third status indication information indicates whether each of the more than two RLC entities corresponding to the PDCP entity is activated, the third status indication information includes a preset field, where one bit in the preset field is used to indicate whether an RLC entity established on the first node and an RLC entity established on the second node are activated, and in the preset field, positions of bits corresponding to the RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

For example, the preset field is a bitmap including three bits, and one bit in the bitmap is used to indicate whether a corresponding RLC entity is activated.

For example, the bitmap is a bitmap formed by last three bits in a bitmap shown in Table 3. First five bits are used to identify an RB, that is, an RB ID of the RB occupies five most significant bits of the field.

When the second status indication information or the third status indication information indicates whether each of the more than two RLC entities corresponding to the PDCP entity is activated, a 3-bit bitmap is set based on an order of LCH IDs corresponding to all the RLC entities. The indication information can indicate a maximum of three RLC entities that are activated or not. The order may be ascending or descending. The value 1 indicates activation and the value 0 indicates deactivation.

When the second status indication information indicates whether the RLC entities established on the first node are activated, a 3-bit bitmap is set based on an order of LCH IDs corresponding to the RLC entities established on the first node. The indication information can indicate a maximum of three RLC entities that are activated or not. The order may be ascending or descending. The value 1 indicates activation and the value 0 indicates deactivation. Likewise, when the third status indication information indicates whether the RLC entities established on the second node are activated, a 3-bit bitmap is set based on an order of LCH IDs corresponding to the RLC entities established on the second node. The indication information can indicate a maximum of three RLC entities that are activated or not. The order may be ascending or descending. The value 1 indicates activation and the value 0 indicates deactivation.

**Table 3**

| | | | |
|---|---|---|---|
| D3 - D7 | D2 | D1 | D0 |
| RB ID | LCH ID1 | LCH ID2 | LCH ID3 |

It should be understood that, when an RLC entity is in the activated state by default (that is, the network device and the terminal device know that the RLC entity is in the activated state), the second status indication information indicates whether each of the RLC entities corresponding to the PDCP entity other than the default activated RLC is activated. To be specific, each bit in the bitmap is used to indicate whether any other RLC entity than the default activated RLC entity is activated. The default activated RLC entity is a primary RLC entity indicated by the network device. Specifically, it is not excluded that there is one primary RLC entity on each RAN device or DU for one radio bearer, or that there is only one primary RLC entity for one radio bearer.

For example, a bitmap is shown in Table 3, and a bitmap with a maximum of three bits is set based on an order of LCH IDs corresponding to all the RLC entities. The first node has X RLC entities, and the second node has Y RLC entities. X bits of the first node correspond to whether the X RLC entities are activated, and a bitmap with X least significant (or most significant) bits is set based on an order of LCH IDs corresponding to the X RLC entities. Y bits of the second node correspond to whether the Y RLC entities are activated, and a bitmap with Y least significant (or most significant) bits is set based on an order of LCH IDs corresponding to the Y RLC entities. If one of the X entities is a primary RLC entity, the X-1 RLC entities correspond to X-1 bits. If one of the Y entities is a primary RLC entity, the Y-1 RLC entities correspond to Y-1 bits.

For example, the preset field is a bitmap including four bits, and one bit in the bitmap is used to indicate whether a corresponding RLC entity is activated.

For example, the bitmap is a bitmap formed by last four bits in a bitmap shown in Table 4. First four bits are used to identify an RB, that is, an RB ID of the RB occupies four most significant bits of the field.

**Table 4**

| | | | | |
|---|---|---|---|---|
| D4 - D7 | D3 | D2 | D1 | D0 |
| RB ID | LCH ID1 | LCH ID2 | LCH ID3 | LCH ID4 |

A meaning expressed by the bitmap formed by the last four bits of the bitmap shown in Table 4 is similar to that expressed by the bitmap shown in Table 3, except that a maximum of four RLC entities activated or not can be indicated. The following uses examples to describe possible forms of the second status indication information and the third status indication information when the second status indication information and the third status indication information respectively indicate whether the RLC entities established on the first node are activated and whether the RLC entities established on the second node are activated.

For example, the second status indication information or the third status indication information is that there are four bits in the bitmap, to prescribe that positions of bits indicating whether the X RLC entities of the first node are activated are positions of X bits in the four bits, and that positions of bits indicating whether the Y RLC entities of the second node are activated are positions of Y bits in the four bits. It is assumed that the first node has one RLC entity, and that the second node has three RLC entities. For example, the bits are most significant bits or least significant bits (or X most significant bits or X least significant bits). Positions of bits indicating whether the RLC entities of the second node are activated are three least significant bits or three most significant bits in the four bits. It may be understood that the X bits are sorted based on an order of X LCH IDs, and that the Y bits are sorted based on an order of Y LCH IDs.

For example, the second status indication information or the third status indication information is that there are four bits in the bitmap, to prescribe that positions of bits indicating whether the X RLC entities of the first node are activated are positions of X least significant (or most significant) bits in the four bits, and that positions of bits indicating whether the Y RLC entities of the second node are activated are positions of Y least significant (or most significant) bits in the four bits. It may be understood that the X bits are sorted based on an order of X LCH IDs, and that the Y bits are sorted based on an order of Y LCH IDs.

For example, the second status indication information or the third status indication information is that there are four bits in the bitmap. It is assumed that there are two RLC entities on the first node and that there are two RLC entities on the second node. In this case, it may be prescribed that positions of bits indicating whether the RLC entities of the first node are activated are positions of two bits in the four bits, for example, two most significant bits or two least significant bits. Positions of bits indicating whether the RLC entities of the second node are activated are two least significant bits or two most significant bits in the four bits.

For example, the second status indication information or the third status indication information is that there are four bits in the bitmap. It is assumed that there are two RLC entities on the first node and that there is one RLC entity on the second node. In this case, it may be prescribed that positions of bits indicating whether the RLC entities of the first node are activated are positions of two bits in the four bits, for example, two most significant bits or two least significant bits. A position of a bit indicating whether the RLC entity of the second node is activated is one least significant bit or one most significant bit in the four bits.

For example, the second status indication information is a set of status information included in an LCH configuration corresponding to each RLC entity, and the status information included in the LCH configuration indicates whether the RLC entity corresponding to the LCH is activated. It may be understood that, in this case, all the RLC entities are equal, and one bit is required to indicate a duplication transmission status.

For example, the first node may indicate, by setting one duplication transmission status bit in a logical channel configuration of each logical channel in RRC signaling, a duplication transmission status of an associated LCH ID.

Considering different terminal devices, or a same terminal device in different cases, or different RBs of a same terminal device, a quantity of RLC entities configured for the RB established between the terminal device and the network device may be different. For example, some terminal devices are configured with an RB with only two RLC entities for duplication transmission, and some terminal devices are configured with an RB with more than two RLC entities for duplication transmission; or a terminal device is configured with an RB with only two RLC entities for duplication transmission in some cases, and is configured with an RB with more than two RLC entities for duplication transmission; or a terminal device is configured with one RB with only two RLC entities for duplication transmission, and is configured with another RB with more than two RLC entities for duplication transmission. In order that activation/deactivation control can be performed in a unified manner, to reduce confusion of the terminal device with an activation command, simplify behavior of the terminal device, and distinguish between only two RLC entities originally configured for duplication transmission on the RB, the second status indication information or the third status indication information may further include another field, where the field indicates a control message of a second status indication message or a third status indication message. For example, the field includes a preset logical channel identifier. The preset identifier is different from a control message used to identify activation or deactivation of PDCP duplication transmission of an RB that restricts duplication transmission of two RLC entities. In the current technology, a field in the control message indicates, by using a bit status of a same bit, whether to activate the duplication mode, and indicates, by using a bit position of a same bit, an RB corresponding to the duplication transmission and associated with one MAC entity. To avoid confusion of the terminal device, it needs to be defined that, for the RB configured with only two RLC entities for duplication transmission, that is, for the RB for duplication transmission configured in a manner identified by an existing standard, the field in the control message indicates, by using a bit position of a same bit, the RB corresponding to the duplication transmission and associated with one MAC entity and configured in the manner identified by the existing standard. In another manner, all embodiments of this application may be extended or applied to management of RBs with only two RLC entities for duplication transmission. To be specific, for an RB configured by the network with two or more than two RLC entities for duplication transmission, with reference to the implementation of the foregoing embodiment, a bit position of the second status indication information or the third status indication information may correspond to a logical channel identifier of one RLC entity. Optionally, a data radio bearer with two or more than two RLC entities for duplication transmission is identified in a possible manner. In this way, activation or deactivation control of all data radio bearers for duplication transmission can be implemented by using a unified status indication.

It should be understood that, in the embodiment shown in FIG. 4 in this application, the second status indication information separately indicates whether each RLC entity is activated, that is, the terminal device can clearly learn, based on the second status indication information, which channel or channels of more than two channels corresponding to the more than two RLC entities can be used to transmit PDCP data (uplink transmission) to the network device. The existing protocol does not provide a solution in which a master node learns, by using indication information, a status of each channel established on a secondary node, and the existing protocol only specifies that the master node may instruct the secondary node whether to enable the duplication transmission function. If the duplication transmission function is enabled, a receive end node may transmit a duplication transmission activation/deactivation command to the terminal device. In comparison with the duplication transmission method in the existing protocol, the method embodiment shown in FIG. 4 in this application can provide accurate channel state information for the terminal device, thereby improving performance of duplication transmission.

Further, the configuration information may further include mode indication information, where the mode indication information is used to notify the second node of the PDCP data duplication transmission mode, and the mode is one of the following three modes: carrier aggregation CA, dual connectivity DC, or CA and DC.

The existing protocol specifies that the PDCP data duplication transmission mode is CA or DC. To be specific, when one RLC entity is configured on each of the first node and the second node, the PDCP data duplication transmission mode is referred to as the DC mode. When two RLC entities are configured on the first node, the PDCP data duplication transmission mode is referred to as the CA mode.

Specifically, in the method procedure shown in FIG. 4, there are a plurality of RLC entities corresponding to the RB. In other words, both the first node and the second node may be configured with two RLC entities. This is different from the existing protocol that specifies that one RB corresponds to two RLC entities. The PDCP data duplication transmission mode may be indicated explicitly. For example, the mode indication information directly indicates the CA mode (CA based duplication configured), or the mode indication information directly indicates the DC mode (DC based duplication configured), or the mode indication information directly indicates the DC+CA mode (DC based duplication configured and CA based duplication configured).

For ease of understanding, in the following description, it is assumed that the quantity of RLC entities corresponding to the RB is 4.

For example, the first node is configured with one RLC entity, the second node is configured with three RLC entities (1+3 channels), and the mode indication information directly indicates that the PDCP data duplication transmission mode is the CA+DC mode; or the first node is not configured with an RLC entity, the second node is configured with four RLC entities (0+4 channels), and the mode indication information directly indicates that the PDCP data duplication transmission mode is the CA mode; or the first node is configured with two RLC entities, the second node is configured with two RLC entities (2+2 channels), and the mode indication information directly indicates that the PDCP data duplication transmission mode is the CA+DC mode.

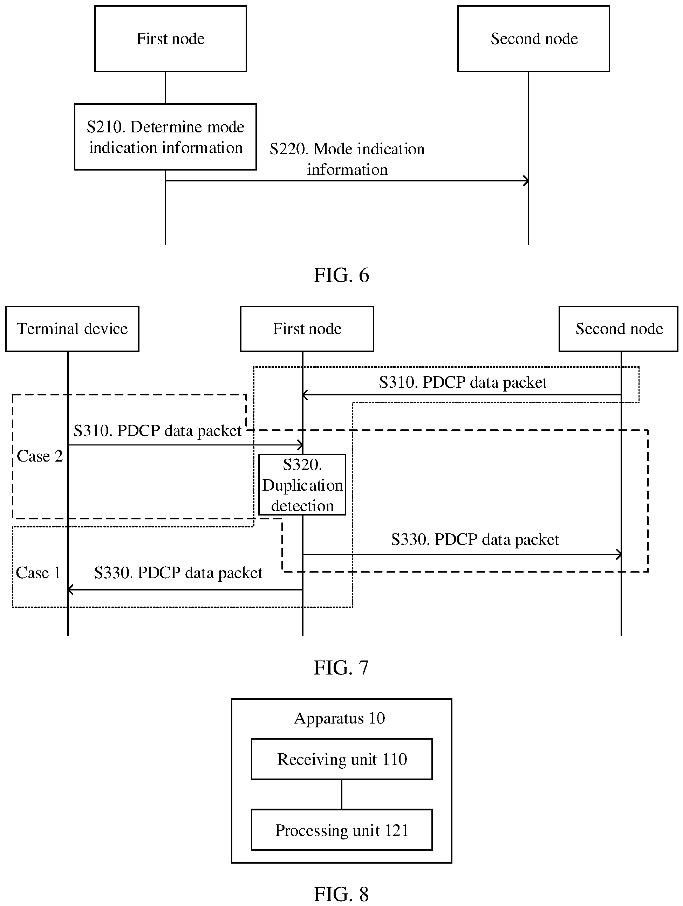

Specifically, the foregoing mode indication information is mainly applied to a CU-DU scenario, because in the CU-DU scenario, for the CA mode, one DU can control only a channel on the DU. For the DC mode, any DU can control a status of another DU. Details are described hereinafter with reference to FIG. 6.

It should be understood that, in this application, it is not defined that an identifier corresponding to an RLC entity needs to be exchanged between the first node and the second node. For example, the first node cannot learn the quantity of RLC entities established by the secondary node and the identifier corresponding to each RLC entity established by the secondary node. However, the second node generates one duplication transmission status bit for the logical channel configuration of each logical channel, to indicate a duplication transmission status of an RLC entity corresponding to an associated LCH ID, and the second node transmits each logical channel configuration to the first node, and then the logical channel configuration is transmitted to the terminal device by using an RRC message of the first node. In this manner, the first node and the second node do not need to explicitly exchange the identifier corresponding to the RLC entity. The first node controls only whether an RLC entity established by the first node is activated, and the second node controls only whether an RLC entity established by the secondary node is activated.

Likewise, the first node may further transmit third indication information to the second node, to indicate that at least one of the RLC entities established on the second node is in the deactivated state.

Specifically, when the method procedure shown in FIG. 4 is applied to the architecture shown in FIG. 2(b), that is, when the first node is the CU-UP and the CU-CP shown in FIG. 2(b), and the second node is the DU shown in FIG. 2(b), because the CU-UP and the CU-CP of the first node have different functions, the following briefly describes which functions are separately performed by the CU-UP and the CU-CP of the first node in the method procedure shown in FIG. 4.

In the foregoing S110, the first node transmits configuration information to the second node, where the configuration information includes address information of N uplink tunnels. First, the CU-CP notifies the CU-UP that N tunnels need to be established. The CU-UP allocates the address information of the N uplink tunnels based on the N tunnels that need to be established, and transmits the address information of the N uplink tunnels to the CU-CP, and the CU-CP transmits the address information to the DU.

In the foregoing S110, the first node transmits configuration information to the second node, where the configuration information includes channel quantity indication information. The CU-CP notifies the DU, and instructs the DU to establish RLC entities, that is, in this case, the first node only needs to perform the function of the CU-CP.

In the foregoing S110, the first node transmits configuration information to the second node, where the configuration information includes second indication information. The CU-CP notifies the DU, and indicates an initial state of each RLC entity established by the DU, that is, in this case, the first node only needs to perform the function of the CU-CP. In this case, the CU-CP may further indicate an initial state of each RLC entity established by the CU-UP.

In the foregoing S150, the first node receives a response message transmitted by the second node, where the response message includes address information of N downlink tunnels respectively configured by the DU for the address information of the N uplink tunnels; and after receiving the response message, the CU-CP forwards the response message to the CU-UP, so that the CU-UP learns the address information of the N downlink tunnels of the N tunnels.

In the foregoing S150, the first node receives a response message transmitted by the second node, where the response message includes first status indication information. After receiving the response message, the CU-CP needs to forward the response message to the CU-UP, so that the CU-UP determines second status indication information based on the first status information.

In the foregoing S160, the first node transmits de-configuration information to the second node. The CU-CP notifies the DU, and instructs the DU to remove some or all of the established RLC entities. In other words, in this case, the first node only needs to perform the function of the CU-CP. In this case, the CU-CP may further instruct the CU-UP to remove some or all of the established RLC entities.

In the foregoing S170, the first node transmits first indication information to the second node. The CU-CP notifies the DU, and indicates a quantity of RLC entities allowed to be activated on the DU, that is, in this case, the first node only needs to perform the function of the CU-CP. In this case, the CU-CP may further indicate a quantity of RLC entities allowed to be activated on the CU-UP.

In the foregoing S180 and S181, the first node determines second status indication information and transmits the second status indication information to the terminal device. The CU-UP determines the second status indication information based on the first status information, and transmits the second status information to the CU-CP. The CU-CP transmits the second status indication information to the terminal device, that is, the CU-CP determines the second status indication information and transmits the second status indication information to the terminal device. In other words, the first node only needs to perform the function of the CU-CP. It should be understood that, in this application, the first node is not limited to one device. For example, the first node is the CU-UP and the CU-CP shown in FIG. 2(b), and the CU-UP and the CU-CP are separately disposed on different devices. The first node may be understood as a device set in which the CU-UP and the CU-CP are separately disposed.

In the method procedure shown in FIG. 4, how the first node configures quantities and statuses of tunnels and channels on the second node is mainly described. In addition, specific forms of the first node and the second node (which may be the RAN device, or may be the CU or the DU) are not limited. In an existing communication method, when the first node is the CU in the scenario shown in FIG. 2(a) and FIG. 2(b), and the second node is the DU in the scenario shown in FIG. 2(a) and FIG. 2(b), the second node determines, based on a quantity of channels configured on the second node for PDCP data transmission with the terminal device, that PDCP data duplication transmission is CA or DC, because in the existing communication method, a total quantity of channels established between the network device and the terminal device is 2. In other words, either the second node is configured with one channel between the second node and the terminal device, which may be understood as "PDCP data duplication transmission is the DC mode", or the second node is configured with two channels between the second node and the terminal device, which may be understood as "PDCP data duplication transmission is the CA mode".

However, if the quantity of channels configured between the network device and the terminal device and used for PDCP data transmission is more than 2, as shown in FIG. 4, for the second node, when a quantity of RLC entities that may be established on the second node is 2, at least one RLC entity is still configured on another DU connected to the first node, that is, PDCP data duplication transmission may be the CA+DC mode.

The following describes in detail how to determine a duplication transmission mode of PDCP data with reference to FIG. 6. FIG. 6 is a schematic flowchart of another communication method according to an embodiment of this application. A first node, a second node, and steps S210 and S220 are included.

S210. The first node determines mode indication information.

Specifically, the mode indication information is used to indicate a mode in which the second node performs PDCP data duplication transmission.

For example, a quantity of channels configured between a network device and the terminal device for PDCP data duplication transmission is 3, the first node is a CU, the second node is a DU, and the first node is connected to two DUs in total. When two RLC entities are established on the second node, the second node cannot consider, based on the quantity 2 of established RLC entities, that the PDCP data duplication transmission mode is a CA mode. The quantity of channels configured between the network device and the terminal device for PDCP data transmission is 3, and when two RLC entities are established on the second node, one RLC entity is established on another DU connected to the first node. Therefore, in this case, it should be considered that the PDCP data duplication transmission mode is a CA+DC mode, that is, the first node should determine the mode indication information, indicating that the mode in which the second node performs PDCP data duplication transmission is the CA+DC mode.

For another example, a quantity of channels configured between a network device and the terminal device for PDCP data duplication transmission is 3, the first node is a CU, the second node is a DU, and the first node is connected to two DUs in total. When one RLC entity is established on the second node, the second node cannot consider, based on the established one RLC entity, that the PDCP data duplication transmission mode is a DC mode. The quantity of channels configured between the network device and the terminal device for PDCP data transmission is 3, and when one RLC entity is established on the second node, two RLC entities are established on another DU connected to the first node. Therefore, in this case, it should be considered that the PDCP data duplication transmission mode is a CA+DC mode, that is, the first node should determine the mode indication information, indicating that the mode in which the second node performs PDCP data duplication transmission is the CA+DC mode.

For another example, a quantity of channels configured between a network device and the terminal device for PDCP data transmission is 3, the first node is a CU, the second node is a DU, and the first node is connected to three DUs in total. When one RLC entity is established on each of the three DUs, the first node should determine the mode indication information, indicating that the mode in which the three DUs perform PDCP data duplication transmission is a DC mode.

For another example, a quantity of channels configured between a network device and the terminal device for PDCP data transmission is 3, the first node is a CU, the second node is a DU, and the first node is connected to two DUs in total. When three RLC entities are established on the second node, the first node should determine the mode indication information, indicating that the mode in which the two DUs perform PDCP data duplication transmission is a CA mode.

S220. The first node transmits the mode indication information to the second node.

After receiving the mode indication information, the second node can accurately learn the current PDCP data duplication transmission mode.

It should be understood that, in this application, because the mode indication information exists, the second node does not need to infer the PDCP data duplication transmission mode based on the quantity of RLC entities established by the secondary node. Instead, the PDCP data duplication transmission mode is explicitly indicated by using the mode indication information. Therefore, a case in which a duplication transmission mode inferred by a node based on a quantity of established RLC entities may be inaccurate is avoided, and performance of PDCP data duplication transmission is improved.

The foregoing mainly describes a configuration process in a PDCP data duplication transmission procedure with reference to FIG. 4 and FIG. 6. The following briefly describes a data transmission process with reference to FIG. 7.

FIG. 7 is a schematic flowchart of still another communication method according to an embodiment of this application. A first node, a second node, and steps S310 and S320 are included. Specifically, a difference between the communication method shown in FIG. 7 and a data packet transmission process in a PDCP data duplication transmission process specified in an existing protocol is that a node not configured with a PDCP entity can perform duplication detection. The first node and the second node may be the foregoing access network device, or may be the foregoing CU or DU. For example, the first node is the RAN device 140 shown in FIG. 1, and the second node is the RAN device 142 shown in FIG. 1. Alternatively, the first node is the RAN device 142 shown in FIG. 1, and the second node is the RAN device 140 shown in FIG. 1. Alternatively, the first node is the CU shown in FIG. 2(a), and the second node is the DU shown in FIG. 2(a). Alternatively, the first node is the CU-UP shown in FIG. 2(b), and the second node is the DU shown in FIG. 2(b).

It should be understood that duplication detection used in the method procedure shown in FIG. 7 in this application is similar to duplication detection specified in the existing protocol, and intended to determine, based on sequence numbers of data packets, whether a plurality of data packets are same data packets. A specific duplication detection procedure is not limited in this application, and a duplication detection procedure specified in the existing protocol may be reused. In the method procedure shown in FIG. 7 in this application, why a secondary node can perform duplication detection is mainly described.

In the embodiment shown in FIG. 7, the first node is a corresponding node, that is, no PDCP entity is configured on the first node.

S310. The first node receives PDCP data.

### Case 1:

For downlink data transmission, the first node receives, by using N tunnels, at least one piece of PDCP data or RLC data transmitted by the second node. A data packet transmitted by the second node may be considered as PDCP data or RLC data.

For example, N = 2, that is, the second node transmits a same PDCP data packet to the first node by using two tunnels.

### Case 2:

For uplink data transmission, the first node receives, by using at least one RLC entity established on the first node, at least one piece of PDCP data transmitted by the terminal device.

For example, three RLC entities are established on the first node, that is, the first node receives, by using three channels corresponding to the three RLC entities, a same PDCP data packet transmitted by the terminal device.

It may be understood that, during downlink data transmission, for the second node, that is, a hosting PDCP node, one piece of PDCP data needs to be duplicated into two pieces, which are transmitted to the first node respectively by using two tunnels, where the two pieces of data have a same PDCP sequence number (serial number, SN) or a general packet radio traffic tunneling protocol user plane (GPRS tunnelling protocol-user plane, GTP-U). During uplink transmission, the terminal device needs to transmit one or more pieces of PDCP data to the first node by using a channel between the terminal device and the first node, where the one or more pieces of data have a same PDCP sequence number SN.

S320. The first node performs duplication detection.

### Case 1:

In a correspondence to the case 1 in S310, the first node receives, by using the N tunnels, N pieces of PDCP data transmitted by the second node. Specifically, each of the N pieces of PDCP data includes a PDCP SN. Alternatively, each of the N pieces of PDCP data includes a GTP-U SN.

The first node parses and obtains the PDCP SN or the GTP-U SN of each PDCP data packet, and then performs duplication detection based on the PDCP SN or the GTP-U SN of each PDCP data packet.

### Case 2:

In a correspondence to the case 2 in S310, the first node receives, by using the at least one RLC entity established on the first node, at least one piece of PDCP data transmitted by the terminal device. Specifically, each of the at least one piece of PDCP data includes a PDCP SN.

The first node parses and obtains the PDCP SN of each PDCP data packet, and then performs duplication detection based on the PDCP SN of each PDCP data packet.

S330. The first node transmits PDCP data.

### Case 1:

In a correspondence to the case 1 in S310 and S320, in this case, there may be two tunnels between the first node and the second node, but there may be at least one channel between the first node and the terminal device.

For example, there are four channels between the first node and the terminal device. The first node receives two PDCP data packets from the second node by using two tunnels. After duplication detection, one duplicate data packet may be discarded, and the remaining data packet is duplicated into four data packets, which are respectively transmitted to the terminal device by using the four channels; or there are four channels between the first node and the terminal device, and the first node receives only one PDCP data packet (data packet transmission on one tunnel fails for a reason). The first node may duplicate the received PDCP data packet to obtain four data packets, and separately transmit the four data packets to the terminal device by using the four channels. It can be avoided that duplication transmission of a same PDCP data packet can be performed on a plurality of channels even if a data packet transmitted on a tunnel is lost, and a quantity of tunnels between nodes may not need to be equal to a quantity of channels. Therefore, resources are saved.

In a correspondence to the case 1 in S310 and S320, in this case, there may be more than two tunnels between the first node and the second node, but there may be at least one channel between the first node and the terminal device.

For example, there are two channels between the first node and the terminal device, the first node receives three PDCP data packets from the second node by using three tunnels; and after duplication detection, may discard one duplicate data packet, and transmit two remaining data packets to the terminal device separately by using two channels; or after duplication detection, may discard two duplicate data packets, duplicate one remaining data packet into two data packets, and transmit the two data packets to the terminal device separately by using two channels. Alternatively, there are four channels between the first node and the terminal device, and the first node receives only one PDCP data packet (data packet transmission on two tunnels fails for a reason). The first node may duplicate the received PDCP data packet to obtain four data packets, and transmit the four data packets to the terminal device separately by using the four channels. It can be avoided that duplication transmission of a same PDCP data packet can be performed on a plurality of channels even if data packets transmitted on a plurality of tunnels are lost.

### Case 2:

In a correspondence to the case 2 in S310 and S320, in this case, there may be at least one channel between the first node and the terminal device, and there may be a plurality of tunnels between the first node and the second node.

For example, there is one channel between the first node and the terminal device, and there are two tunnels between the first node and the second node. The first node receives one PDCP data packet from the terminal device by using one channel, duplicates the data packet to obtain two data packets, and separately transmits the two data packets to the second node by using the two tunnels. Alternatively, there are four channels between the first node and the terminal device, and there are two tunnels between the first node and the second node. The first node receives four PDCP data packets from the terminal device by using one channel; and after duplication detection, may discard two duplicate data packets, and separately transmit remaining data packets to the second node by using the two tunnels; or after duplication detection, may discard three duplicate data packets, duplicate one remaining data packet into four data packets, and separately transmit the four data packets to the second node by using the two tunnels. Alternatively, there are four channels between the first node and the terminal device, and there are two tunnels between the first node and the second node. The first node receives four PDCP data packets from the terminal device by using one channel, and separately transmits the received data packets to the second node by using the two tunnels without performing duplication detection.

Based on the foregoing embodiment, further, to implement efficient downlink duplication transmission, the hosting PDCP entity node may determine an appropriate downlink duplication transmission channel based on auxiliary information transmitted by the corresponding node, and perform downlink data duplication transmission. In the current technology, auxiliary information of a bearer that is transmitted by a corresponding node by using a downlink user plane transmission channel includes at least one of the following information: a downlink radio quality index indicating downlink radio quality of a data radio bearer, an uplink radio quality index indicating uplink radio quality of the data radio bearer, an average continuous quality improvement (continuous quality improvement, CQI), an average hybrid automatic repeat request (hybrid automatic retransmission request, HARQ) failure, average HARQ retransmission data, and a power headroom report (power headroom report, PHR). Considering that different duplication transmission channels use different transmission carriers, the corresponding node should transmit auxiliary information of a corresponding RLC entity or a corresponding duplication transmission channel on each transmission tunnel. When the duplication transmission channels are in a one-to-one correspondence to the duplication transmission tunnels, auxiliary information related to one RLC entity is transmitted in each tunnel. When the duplication transmission channels are not in a one-to-one correspondence to the duplication transmission tunnels, auxiliary information related to one or more RLCs is transmitted in each tunnel, and in addition to the foregoing auxiliary information, duplication transmission channel information associated with the auxiliary information is added, so that the hosting PDCP entity node instructs the related node to transmit a command to de-configure or deactivate the related RLC entity for duplication transmission. When the duplication transmission channels are not in a one-to-one correspondence to the duplication transmission tunnels, auxiliary information related to one or more RLCs is transmitted in each tunnel, but the duplication transmission channels to which the auxiliary information belongs are not distinguished. The hosting PDCP entity node determines, based on all radio conditions of the bearer, to instruct the related node to transmit a command to de-configure or deactivate the related RLC entity for duplication transmission. In addition, to assist the corresponding node in controlling an uplink duplication transmission status of the terminal on the RLC entity associated with the hosting node, the hosting node may be extended to transmit the auxiliary information of the bearer to the secondary node.

The foregoing describes in detail the communication methods according to the embodiments of this application with reference to FIG. 4 to FIG. 7. The following describes in detail communications apparatuses according to the embodiments of this application with reference to FIG. 8 to FIG. 13. It should be understood that the communications apparatuses and the communication methods correspond to each other. For similar descriptions, refer to the method embodiments. It should be noted that the communications apparatuses may be used together with the foregoing communication methods, or may be used independently.

FIG. 8 is a schematic diagram of a communications apparatus 10 according to this application. As shown in FIG. 8, the apparatus 10 includes a receiving unit 110 and a processing unit 121.

The receiving unit is configured to receive second status indication information transmitted by a first node, where the second status indication information indicates whether each of more than two RLC entities corresponding to the PDCP entity is activated, or whether an RLC entity established on the first node is activated; and
the processing unit 320 is configured to determine, based on the second status indication information, whether each of the more than two RLC entities corresponding to the PDCP entity is activated, or whether each of RLC entities established on the first node is activated;
   or
the receiving unit is configured to receive third status indication information transmitted by a second node, where the third status indication information indicates whether each of more than two RLC entities corresponding to the PDCP entity is activated, or whether an RLC entity established on the second node is activated; and
the processing unit 320 is configured to determine, based on the third status indication information, whether each of the more than two RLC entities corresponding to the PDCP entity is activated, or whether each of RLC entities established on the second node is activated.

The apparatus 10 completely corresponds to the terminal device in the method embodiment, and corresponding units of the apparatus 10 are configured to perform corresponding steps performed by the terminal device in the method embodiments shown in FIG. 4 to FIG. 7.

The receiving unit 110 in the apparatus 10 performs the receiving step of the terminal device in the method embodiment. For example, step 190 of receiving the second status indication information transmitted by the first node in FIG. 4 is performed. The processing unit 121 performs the steps of internal implementation or processing of the terminal device in the method embodiment.

Optionally, the apparatus 10 may further include a transmission unit 130, configured to transmit information to another device. The receiving unit 110 and the transmission unit 130 may form a transceiver unit, and have both receiving and transmitting functions. The processing unit 121 may be a processor. The transmission unit 130 may be a transmitter. The receiving unit 110 may be a receiver. The receiver and the transmitter may be integrated together to form a transceiver.

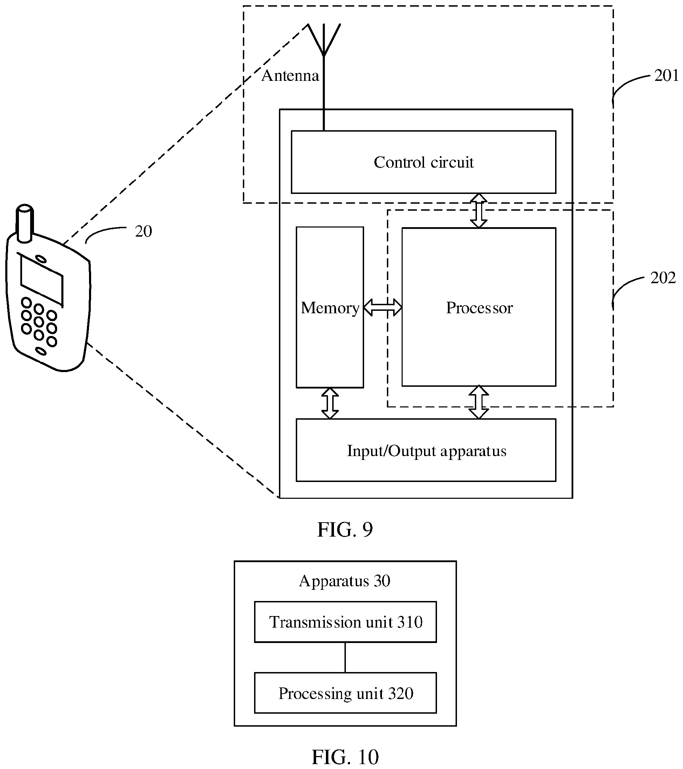

FIG. 9 is a schematic structural diagram of a terminal device 20 to which an embodiment of this application is applicable. The terminal device 20 may be applied to the system shown in FIG. 1. For ease of description, FIG. 9 shows only main components of the terminal device. As shown in FIG. 9, the terminal device 20 includes a processor, a memory, a control circuit, an antenna, and an input/output apparatus. The processor is configured to control the antenna and the input/output apparatus to transmit and receive signals. The memory is configured to store a computer program. The processor is configured to invoke and run the computer program in the memory, to perform a corresponding procedure and/or operation performed by the terminal device in the communication method provided in this application. Details are not described herein again.

A person skilled in the art may understand that, for ease of description, FIG. 9 shows only one memory and one processor. In an actual terminal device, there may be a plurality of processors and memories. The memory may also be referred to as a storage medium, a storage device, or the like. This is not limited in this embodiment of this application.

The input/output apparatus is configured to receive second status indication information transmitted by the first node, where the second status indication information indicates whether each of more than two RLC entities corresponding to the PDCP entity is activated, or indicates whether an RLC entity established on the first node is activated; or
the input/output apparatus is configured to receive third status indication information transmitted by the second node, where the third status indication information indicates whether each of more than two RLC entities corresponding to the PDCP entity is activated, or indicates whether an RLC entity established on the second node is activated.

The processor is configured to: parse the second status indication information or the third status indication information, and determine, based on the third status indication information, whether each of the more than two RLC entities corresponding to the PDCP entity is activated, or whether each of RLC entities established on the second node is activated, or determine, based on the second status indication information, whether each of the more than two RLC entities corresponding to the PDCP entity is activated, or whether each of RLC entities established on the first node is activated.

For example, the second status indication information includes:
a preset field, where one bit in the preset field is used to indicate whether an RLC entity established on the first node is activated, and in the preset field, positions of bits corresponding to the RLC entities established on the first node are sorted based on values of LCH identifiers of the RLC entities established on the first node; or status information included in an LCH configuration corresponding to each RLC entity established on the first node, where the status information indicates whether the corresponding RLC entity is activated.

For example, the second status indication information includes:
a preset field, where one bit in the preset field is used to indicate whether an RLC entity established on the first node and an RLC entity established on the second node are activated, and in the preset field, positions of bits corresponding to the RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

For example, the third status indication information includes:
a preset field, where one bit in the preset field is used to indicate whether an RLC entity established on the second node is activated, and in the preset field, positions of bits corresponding to the RLC entities established on the second node are sorted based on values of LCH identifiers of the RLC entities established on the second node; or status information included in an LCH configuration corresponding to each RLC entity established on the second node, where the status information indicates whether the corresponding RLC entity is activated.

For example, the third status indication information includes:
a preset field, where one bit in the preset field is used to indicate whether an RLC entity established on the first node and an RLC entity established on the second node are activated, and in the preset field, positions of bits corresponding to the RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

FIG. 10 is a schematic diagram of a communications apparatus 30 according to this application. As shown in FIG. 10, the apparatus 30 includes a transmission unit 310 and a processing unit 320.

The processing unit 320 is configured to determine configuration information, where the configuration information is used to instruct the second node to establish N tunnels, the tunnel is used to transmit PDCP data or RLC data between the first node and the second node, and N is an integer greater than or equal to 2.

The transmission unit 310 transmits the configuration information to the second node.

The apparatus 30 completely corresponds to the first node in the method embodiment, and corresponding units of the apparatus 30 are configured to perform corresponding steps performed by the first node in the method embodiments shown in FIG. 4 to FIG. 7.

The transmission unit 310 in the apparatus 30 performs the transmitting step of the first node in the method embodiment. For example, step 120 of transmitting the configuration information to the second node in FIG. 4 is performed. The processing unit 320 performs steps of internal implementation or processing of the first node in the method embodiment. For example, step 110 of determining configuration information in FIG. 4 is performed.

Optionally, the apparatus 30 may further include a receiving unit 330, configured to receive information transmitted by another device. For example, step 150 of receiving the response message transmitted by the second node in FIG. 4 is performed. The receiving unit 330 and the transmission unit 310 may form a transceiver unit, and have both receiving and transmitting functions. The processing unit 320 may be a processor. The transmission unit 310 may be a transmitter. The receiving unit 330 may be a receiver. The receiver and the transmitter may be integrated together to form a transceiver.

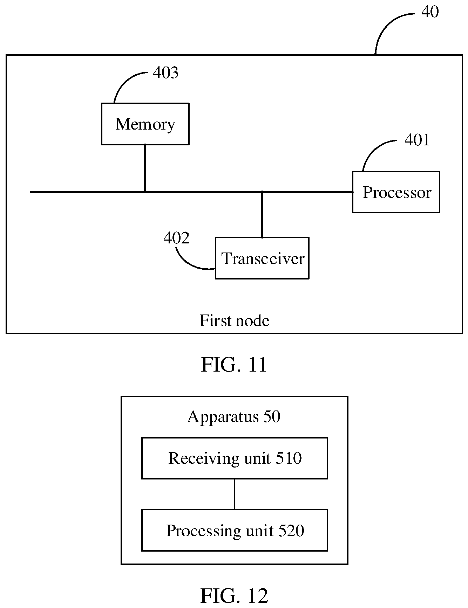

FIG. 11 is a schematic structural diagram of a first node 40 to which an embodiment of this application is applicable. The first node 40 may be applied to the system shown in FIG. 1 or FIG. 2(a) and FIG. 2(b). For ease of description, FIG. 11 shows only main components of the first node.

The first node 40 may correspond to (for example, may be configured on or may be) the hosting PDCP node described in the foregoing method embodiment, or the centralized unit described in the foregoing method embodiment, or the access network device described in the foregoing method embodiment, or the CU-CP described in the foregoing method embodiment. The first node 40 may include a processor 401 and a transceiver 402, and the processor 401 and the transceiver 402 are communicatively coupled to each other. Optionally, the first node 40 further includes a memory 403, and the memory 403 is communicatively coupled to the processor 401. Optionally, the processor 401, the memory 403, and the transceiver 402 may be communicatively coupled to each other. The memory 403 may be configured to store instructions. The processor 401 is configured to execute the instructions stored in the memory 403, to control the transceiver 402 to receive and/or transmit information or a signal. The processor 401 and the transceiver 402 are respectively configured to perform the actions or processes performed by the hosting PDCP node described in the foregoing method embodiment, or the centralized unit described in the foregoing method embodiment, or the access network device described in the foregoing method embodiment, or the CU-CP described in the foregoing method embodiment. Herein, to avoid repetition, detailed descriptions thereof are omitted. A person skilled in the art may understand that, for ease of description, FIG. 11 shows only one memory and one processor. In an actual first node, there may be a plurality of processors and memories. The memory may also be referred to as a storage medium, a storage device, or the like. This is not limited in this embodiment of this application.

Specifically, the processor is configured to determine configuration information, where the configuration information is used to instruct the second node to establish N tunnels, the tunnel is used to transmit PDCP data or RLC data between the first node and the second node, and N is an integer greater than or equal to 2.

The transceiver is configured to transmit the configuration information to the second node.

For example, the configuration information is further used to instruct the second node to establish N RLC entities; or
the configuration information further includes channel quantity indication information, where the channel quantity indication information is used to instruct the second node to establish M RLC entities, and M is a positive integer.

For example, each RLC entity established by the secondary node corresponds to one identifier; and
the transceiver is further configured to receive a response message transmitted by the second node, where the response message includes the identifier corresponding to each RLC entity established by the secondary node.

The transceiver is further configured to transmit de-configuration information to the second node, where the de-configuration information is used to instruct the second node to remove at least one RLC entity, and the de-configuration information includes an identifier corresponding to each of the at least one RLC entity; or the de-configuration information includes a first value, and the first value indicates a quantity of RLC entities to be removed by the second node; or the at least one RLC entity is some or all RLC entities among all the RLC entities established by the secondary node except a primary RLC entity.

The transceiver is further configured to transmit first indication information to the second node, where the first indication information indicates a quantity of RLC entities allowed to be activated on the second node, where the first indication information includes a second value, and the second value is a value of the quantity of RLC entities allowed to be activated on the second node; or the first indication information includes a third value, and the third value is a value of a quantity of initially activated tunnels among the N tunnels.

For example, the configuration information includes second indication information, where the second indication information is used to indicate an initial state of each RLC entity established by the secondary node, and the second indication information indicates that the initial state of each RLC entity established by the secondary node is an activated state; or the second indication information includes a fourth value, where the fourth value is a quantity of RLC entities that are initially in an activated state among the RLC entities established by the secondary node; or the second indication information indicates that a duplication transmission mode of the RB is in an activated state, where the duplication transmission mode indicates that PDCP data of the RB is transmitted by using a plurality of RLC entities.

The processor is further configured to determine second status indication information, where the second status indication information indicates whether each of more than two RLC entities corresponding to the PDCP entity is activated, or indicates whether an RLC entity established on the first node is activated.

The transceiver is further configured to transmit the second status indication information to a terminal device.

For example, the second status indication information includes:
a preset field, where one bit in the preset field is used to indicate whether an RLC entity established on the first node is activated, and in the preset field, positions of bits corresponding to RLC entities established on the first node are sorted based on values of LCH identifiers of the RLC entities established on the first node; or status information included in an LCH configuration corresponding to each RLC entity established on the first node, where the status information indicates whether the corresponding RLC entity is activated.

For example, the second status indication information includes:
a preset field, where one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

For example, the configuration information includes mode indication information, where the mode indication information is used to indicate a mode in which the second node performs PDCP data duplication transmission.

For example, the configuration information includes information about the RB and address information of the N tunnels.

The transceiver is further configured to receive at least one piece of PDCP data.

The processor is further configured to perform duplication detection based on a sequence number corresponding to each of the at least one piece of PDCP data.

The transceiver receives, by using the N tunnels, at least one piece of PDCP data transmitted by the second node.

After the processor performs duplication detection, the transceiver transmits a plurality of pieces of PDCP data to the terminal device by using a plurality of RLC entities established by the processor; or the transceiver receives, by using at least one RLC entity established by the processing unit, at least one piece of PDCP or RLC data transmitted by the terminal device.

After the processor performs duplication detection, the transceiver transmits a plurality of pieces of PDCP data to the second node by using the N tunnels.

FIG. 12 is a schematic diagram of a communications apparatus 50 according to this application. As shown in FIG. 12, the apparatus 50 includes a receiving unit 410 and a processing unit 420.

The receiving unit 410 is configured to receive configuration information transmitted by a first node, where the configuration information is used to instruct the second node to establish N tunnels, the tunnel is used to transmit PDCP data or RLC data between the first node and the second node, and N is an integer greater than or equal to 2.

The processing unit 420 is configured to establish the N tunnels between the communications apparatus and the first node based on the configuration information by parsing the configuration information.

The apparatus 50 completely corresponds to the second node in the method embodiment, and corresponding units of the apparatus 50 are configured to perform corresponding steps performed by the second node in the method embodiments shown in FIG. 4 to FIG. 7.

The receiving unit 410 in the apparatus 50 performs the receiving step of the second node in the method embodiment. For example, step 120 of receiving the configuration information transmitted by the first node in FIG. 4 is performed. The processing unit 420 performs steps of internal implementation or processing of the second node in the method embodiment.

Optionally, the apparatus 50 may further include a transmission unit 430, configured to transmit information to another device. For example, step 150 of transmitting a response message to the first node in FIG. 4 is performed. The receiving unit 410 and the transmission unit 430 may form a transceiver unit, and have both receiving and transmitting functions. The processing unit 420 may be a processor. The transmission unit 430 may be a transmitter. The receiving unit 41 may be a receiver. The receiver and the transmitter may be integrated together to form a transceiver.

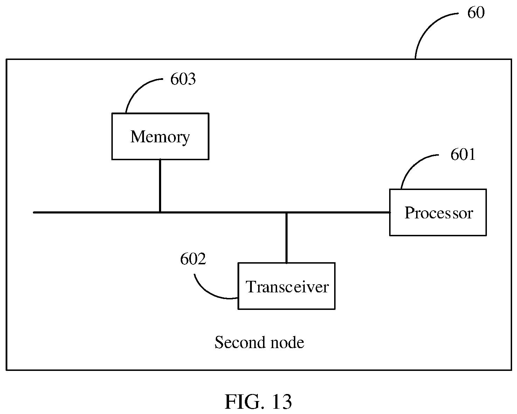

FIG. 13 is a schematic structural diagram of a second node 60 to which an embodiment of this application is applicable. The second node 60 may be applied to the system shown in FIG. 1 or FIG. 2(a) and FIG. 2(b). For ease of description, FIG. 13 shows only main components of the second node.

The second node 60 may correspond to (for example, may be configured on or may be) the corresponding node described in the foregoing method embodiment, or the distributed unit described in the foregoing method embodiment, or the access network device described in the foregoing method embodiment, or the CU-UP described in the foregoing method embodiment. The second node 60 may include a processor 601 and a transceiver 602, and the processor 601 and the transceiver 602 are communicatively coupled to each other. Optionally, the second node 60 further includes a memory 603, and the memory 603 is communicatively coupled to the processor 601. Optionally, the processor 601, the memory 603, and the transceiver 602 may be communicatively coupled to each other. The memory 603 may be configured to store instructions. The processor 601 is configured to execute the instructions stored in the memory 603, to control the transceiver 602 to receive and/or transmit information or a signal. The processor 601 and the transceiver 602 are respectively configured to perform the actions or processes performed by the corresponding node described in the foregoing method embodiment, or the distributed unit described in the foregoing method embodiment, or the access network device described in the foregoing method embodiment, or the CU-UP described in the foregoing method embodiment. Herein, to avoid repetition, detailed descriptions thereof are omitted. A person skilled in the art may understand that, for ease of description, FIG. 13 shows only one memory and one processor. In an actual second node, there may be a plurality of processors and memories. The memory may also be referred to as a storage medium, a storage device, or the like. This is not limited in this embodiment of this application.

The transceiver is configured to receive configuration information transmitted by the first node, where the configuration information is used to instruct the processor to establish N tunnels, the tunnel is used to transmit PDCP data or RLC data between the first node and the second node, and N is an integer greater than or equal to 2.

The processor is configured to establish the N tunnels between the second node and the first node based on the configuration information.

For example, the configuration information is further used to instruct the processor to establish N RLC entities; or
the configuration information further includes channel quantity indication information, where the channel quantity indication information is used to instruct the processor to establish M RLC entities, and M is a positive integer.

The processor is further configured to configure an identifier for each RLC entity established by the processor.

The transceiver is configured to transmit a response message to the first node, where the response message includes the identifier corresponding to each RLC entity established by the processor.

The transceiver is further configured to receive de-configuration information transmitted by the first node, where the de-configuration information is used to instruct the processor to remove at least one RLC entity, where the de-configuration information includes an identifier corresponding to each of the at least one RLC entity; or the de-configuration information includes a first value, and the first value indicates a quantity of RLC entities to be removed by the processor; or the at least one RLC entity is some or all RLC entities among all the RLC entities established by the processor except a primary RLC entity.

The transceiver is further configured to receive first indication information transmitted by the first node, where the first indication information indicates a quantity of RLC entities allowed to be activated on the second node, or the processor determines, based on a predefined quantity of RLC entities allowed to be activated, a quantity of RLC entities allowed to be activated on the second node, where the first indication information includes a second value, and the second value is a value of the quantity of RLC entities allowed to be activated on the second node; or the first indication information includes a third value, and the third value is a value of a quantity of initially activated tunnels among the N tunnels.

For example, the configuration information includes second indication information, where the second indication information is used to indicate an initial state of each RLC entity established by the processor, and the second indication information indicates that the initial state of each RLC entity established by the processor is an activated state; or the second indication information includes a fourth value, where the fourth value is a quantity of RLC entities that are initially in an activated state among the RLC entities established by the processor; or the second indication information indicates that a duplication transmission mode of the RB is in an activated state, where the duplication transmission mode indicates that PDCP data of the RB is transmitted by using a plurality of RLC entities.

The processor is further configured to determine third status indication information, where the third status indication information indicates whether each of more than two RLC entities corresponding to the PDCP entity is activated, or indicates whether an RLC entity established on the second node is activated.

The transceiver is configured to transmit the third status indication information to the terminal device.

For example, the third status indication information includes:
a preset field, where one bit in the preset field is used to indicate whether an RLC entity established on the second node is activated, and in the preset field, positions of bits corresponding to RLC entities established on the second node are sorted based on values of LCH identifiers of the RLC entities established on the second node; or status information included in an LCH configuration corresponding to each RLC entity established on the second node, where the status information indicates whether the corresponding RLC entity is activated.

For example, the third status indication information includes:

The third status indication information includes:
a preset field, where one bit in the preset field is used to indicate whether an RLC entity established on the first node or an RLC entity established on the second node is activated, and in the preset field, positions of bits corresponding to RLC entities established on the first node and the second node are sorted based on values of LCH identifiers of the RLC entities established on the first node and the second node; or status information included in an LCH configuration corresponding to each RLC entity established on the first node and the second node, where the status information indicates whether the corresponding RLC entity is activated.

For example, the configuration information includes mode indication information, where the mode indication information is used to indicate a mode in which the second node performs PDCP data duplication transmission.

An embodiment of this application further provides a communications system, including the foregoing terminal device, first node, and second node.

This application further provides a computer-readable storage medium. The computer-readable storage medium stores instructions. When the instructions are run on a computer, the computer is enabled to perform steps performed by the first node in the methods shown in FIG. 4 to FIG. 7.

This application further provides a computer-readable storage medium. The computer-readable storage medium stores instructions. When the instructions are run on a computer, the computer is enabled to perform steps performed by the second node in the methods shown in FIG. 4 to FIG. 7.

This application further provides a computer-readable storage medium. The computer-readable storage medium stores instructions. When the instructions are run on a computer, the computer is enabled to perform steps performed by the terminal device in the methods shown in FIG. 4 to FIG. 7.

This application further provides a computer program product including instructions. When the computer program product is run on a computer, the computer is enabled to perform steps performed by the first node in the methods shown in FIG. 4 to FIG. 7

This application further provides a computer program product including instructions. When the computer program product is run on a computer, the computer is enabled to perform steps performed by the second node in the methods shown in FIG. 4 to FIG. 7

This application further provides a computer program product including instructions. When the computer program product is run on a computer, the computer is enabled to perform steps performed by the terminal device in the methods shown in FIG. 4 to FIG. 7

This application further provides a chip, including a processor. The processor is configured to read and run a computer program stored in a memory, to perform a corresponding operation and/or a corresponding procedure performed by the first node in the communication method provided in this application. Optionally, the chip further includes the memory, the memory and the processor are connected to the memory by using a circuit or a wire, and the processor is configured to read and execute the computer program in the memory. Further, optionally, the chip further includes a communications interface, and the processor is connected to the communications interface. The communications interface is configured to receive data and/or information that needs to be processed. The processor obtains the data and/or information from the communications interface, and processes the data and/or information. The communications interface may be an input/output interface.

This application further provides a chip, including a processor. The processor is configured to invoke and run a computer program stored in a memory, to perform a corresponding operation and/or a corresponding procedure performed by the second node in the communication method provided in this application. Optionally, the chip further includes the memory, the memory and the processor are connected to the memory by using a circuit or a wire, and the processor is configured to read and execute the computer program in the memory. Further, optionally, the chip further includes a communications interface, and the processor is connected to the communications interface. The communications interface is configured to receive data and/or information that needs to be processed. The processor obtains the data and/or information from the communications interface, and processes the data and/or information. The communications interface may be an input/output interface.

This application further provides a chip, including a processor. The processor is configured to read and run a computer program stored in a memory, to perform a corresponding operation and/or a corresponding procedure performed by the terminal device in the communication method provided in this application. Optionally, the chip further includes the memory, the memory and the processor are connected to the memory by using a circuit or a wire, and the processor is configured to read and execute the computer program in the memory. Further, optionally, the chip further includes a communications interface, and the processor is connected to the communications interface. The communications interface is configured to receive data and/or information that needs to be processed. The processor obtains the data and/or information from the communications interface, and processes the data and/or information. The communications interface may be an input/output interface.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein when a radio bearer RB is established between a network device and a terminal device, the network device comprises a first node and a second node, and functional entities corresponding to the RB comprise one packet data convergence protocol PDCP entity and more than two radio link control RLC entities corresponding to the PDCP entity, wherein the method comprises:
determining, by the first node, configuration information, wherein the configuration information is used to instruct the second node to establish N tunnels, the tunnel is used to transmit PDCP data or RLC data of the RB between the first node and the second node, and N is an integer greater than or equal to 2; and
transmitting, by the first node, the configuration information to the second node.

2. The communication method according to claim 1, wherein the configuration information is further used to instruct the second node to establish N RLC entities; or
the configuration information further comprises channel quantity indication information, wherein the channel quantity indication information is used to instruct the second node to establish M RLC entities, and M is a positive integer.

3. The communication method according to claim 2, wherein each RLC entity established by the second node corresponds to one identifier; and
the method further comprises:
receiving, by the first node, a response message transmitted by the second node, wherein the response message comprises the identifier corresponding to each RLC entity established by the second node, and the identifier corresponding to the RLC entity is at least one of the following plurality of items: an identifier of the RLC entity, a logical channel LCH identifier of an LCH of the RLC entity, a tunnel identifier of a tunnel corresponding to the RLC entity, and a channel identifier of a channel corresponding to the RLC entity.

4. The communication method according to claim 2 or 3, wherein the method further comprises:
transmitting, by the first node, de-configuration information to the second node, wherein the de-configuration information is used to instruct the second node to remove at least one RLC entity, wherein
the de-configuration information comprises an identifier corresponding to each of the at least one RLC entity; or
the de-configuration information comprises a first value, and the first value indicates a quantity of RLC entities to be removed by the second node; or
the at least one RLC entity is some or all RLC entities among all the RLC entities established by the secondary node except a primary RLC entity.

5. The communication method according to any one of claims 2 to 4, wherein the method further comprises:
transmitting, by the first node, first indication information to the second node, wherein the first indication information indicates a quantity of RLC entities allowed to be activated on the second node, wherein
the first indication information comprises a second value, and the second value is a value of the quantity of RLC entities allowed to be activated on the second node; or
the first indication information comprises a third value, and the third value is a value of a quantity of initially activated tunnels among the N tunnels.

6. The communication method according to any one of claims 1 to 5, wherein the method further comprises:
determining, by the first node, second status indication information, wherein the second status indication information indicates whether each of more than two RLC entities corresponding to the PDCP entity is activated, or indicates whether an RLC entity established on the first node is activated; and
the first node transmits the second status indication information to the terminal device.

7. The communication method according to claim 6, wherein the second status indication information comprises:
a 3-bit preset field, wherein one bit in the preset field is used to indicate whether an RLC entity established on the first node is activated, and in the preset field, positions of bits corresponding to RLC entities established on the first node are sorted based on values of LCH identifiers of the RLC entities established on the first node; or
status information comprised in an LCH configuration corresponding to each RLC entity established on the first node, wherein the status information indicates whether the corresponding RLC entity is activated.

8. The communication method according to claim 6, wherein the second status indication information comprises:
a 3-bit preset field, wherein one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or
status information comprised in an LCH configuration corresponding to each RLC entity established on the first node and the second node, wherein the status information indicates whether the corresponding RLC entity is activated.

9. The communication method according to claim 6, wherein the second status indication information comprises:
a 3-bit preset field, wherein one bit in the preset field is used to indicate whether an RLC entity established on the first node and an RLC entity established on the second node are activated, Q bits corresponding to RLC entities established on the first node are in a bitmap of Q least significant bits in the preset field, and the bitmap of the Q least significant bits is set based on an order of LCH IDs corresponding to the RLC entities established on the first node, and Q is a positive integer; or
status information comprised in an LCH configuration corresponding to each RLC entity established on the first node and the second node, wherein the status information indicates whether the corresponding RLC entity is activated.

10. The communication method according to any one of claims 2 to 9, wherein the configuration information comprises mode indication information, the mode indication information is used to indicate a mode in which the second node performs PDCP data duplication transmission, and the mode is one of the following three modes: carrier aggregation CA, dual connectivity DC, and CA and DC.

11. The communication method according to any one of claims 1 to 10, wherein the configuration information comprises information about the RB and address information of the N tunnels.

12. A communication method, wherein when a radio bearer RB is established between a network device and a terminal device, the network device comprises a first node and a second node, and functional entities corresponding to the RB comprise one packet data convergence protocol PDCP entity and more than two radio link control RLC entities corresponding to the PDCP entity, wherein the method comprises:
receiving, by the second node, configuration information transmitted by the first node, wherein the configuration information is used to instruct the second node to establish N tunnels, the tunnel is used to transmit PDCP data or RLC data between the first node and the second node, and N is an integer greater than or equal to 2; and
establishing, by the second node, N tunnels between the second node and the first node based on the configuration information.

13. The communication method according to claim 12, wherein the configuration information is further used to instruct the second node to establish N RLC entities; or
the configuration information further comprises channel quantity indication information, wherein the channel quantity indication information is used to instruct the second node to establish M RLC entities, and M is a positive integer.

14. The communication method according to claim 13, wherein the method further comprises:
configuring, by the second node, a corresponding identifier for each RLC entity established by the second node; and
transmitting, by the second node, a response message to the first node, wherein the response message comprises the identifier corresponding to each RLC entity established by the second node, and the identifier corresponding to the RLC entity is at least one of the following plurality of items: an identifier of the RLC entity, a logical channel LCH identifier of an LCH of the RLC entity, a tunnel identifier of a tunnel corresponding to the RLC entity, and a channel identifier of a channel corresponding to the RLC entity.

15. The communication method according to claim 13 or 14, wherein the method further comprises:
receiving, by the second node, de-configuration information transmitted by the first node, wherein the de-configuration information is used to instruct the second node to remove at least one RLC entity, wherein
the de-configuration information comprises an identifier corresponding to each of the at least one RLC entity; or
the de-configuration information comprises a first value, and the first value indicates a quantity of RLC entities to be removed by the second node; or
the at least one RLC entity is some or all RLC entities among all the RLC entities established by the second node except a primary RLC entity.

16. The communication method according to any one of claims 13 to 15, wherein the method further comprises:
receiving, by the second node, first indication information transmitted by the first node, wherein the first indication information indicates a quantity of RLC entities allowed to be activated on the second node, or determining, by the second node based on a predefined quantity of RLC entities allowed to be activated, a quantity of RLC entities allowed to be activated on the second node, wherein
the first indication information comprises a second value, and the second value is a value of the quantity of RLC entities allowed to be activated on the second node; or
the first indication information comprises a third value, and the third value is a value of a quantity of initially activated tunnels among the N tunnels.

17. The communication method according to any one of claims 13 to 16, wherein the method further comprises:
determining, by the second node, third status indication information, wherein the third status indication information indicates whether each of more than two RLC entities corresponding to the PDCP entity is activated, or indicates whether an RLC entity established on the second node is activated; and
transmitting, by the second node, the third status indication information to the terminal device.

18. The communication method according to claim 17, wherein the third status indication information comprises:
a preset field, wherein one bit in the preset field is used to indicate whether an RLC entity established on the second node is activated, and in the preset field, positions of bits corresponding to RLC entities established on the second node are sorted based on values of LCH identifiers of the RLC entities established on the second node; or
status information comprised in an LCH configuration corresponding to each RLC entity established on the second node, wherein the status information indicates whether the corresponding RLC entity is activated.

19. The communication method according to claim 17, wherein the third status indication information comprises:
a preset field, wherein one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or
status information comprised in an LCH configuration corresponding to each RLC entity established on the first node and the second node, wherein the status information indicates whether the corresponding RLC entity is activated.

20. The communication method according to any one of claims 12 to 18, wherein the configuration information comprises mode indication information, the mode indication information is used to indicate a mode in which the second node performs PDCP data duplication transmission, and the mode is one of the following three modes: carrier aggregation CA, dual connectivity DC, and CA and DC.

21. The communication method according to any one of claims 12 to 20, wherein the configuration information comprises information about the RB and address information of the N tunnels.

22. A communication method, wherein when a radio bearer RB is established between a network device and a terminal device, the network device comprises a first node and a second node, and functional entities corresponding to the RB comprise one packet data convergence protocol PDCP entity and more than two radio link control RLC entities corresponding to the PDCP entity, wherein the method comprises:
receiving, by the terminal device, second status indication information transmitted by the first node, wherein the second status indication information indicates whether each of more than two RLC entities corresponding to the PDCP entity is activated, or indicates whether an RLC entity established on the first node is activated; or
receiving, by the terminal device, third status indication information transmitted by the second node, wherein the third status indication information indicates whether each of more than two RLC entities corresponding to the PDCP entity is activated, or indicates whether an RLC entity established on the second node is activated; and
transmitting, by the terminal device based on at least one of the second status indication information and the third status indication information, PDCP data on a channel corresponding to the activated RLC entity.

23. The communication method according to claim 22, wherein the second status indication information comprises:
a 3-bit preset field, wherein one bit in the preset field is used to indicate whether an RLC entity established on the first node is activated, and in the preset field, positions of bits corresponding to RLC entities established on the first node are sorted based on values of LCH identifiers of the RLC entities established on the first node; or
status information comprised in an LCH configuration corresponding to each RLC entity established on the first node, wherein the status information indicates whether the corresponding RLC entity is activated.

24. The communication method according to claim 22, wherein the second status indication information comprises:
a 3-bit preset field, wherein one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or
status information comprised in an LCH configuration corresponding to each RLC entity established on the first node and the second node, wherein the status information indicates whether the corresponding RLC entity is activated.

25. The communication method according to claim 22, wherein the second status indication information comprises:
a 3-bit preset field, wherein one bit in the preset field is used to indicate whether an RLC entity established on the first node and an RLC entity established on the second node are activated, Q bits corresponding to RLC entities established on the first node are in a bitmap of Q least significant bits in the preset field, and the bitmap of the Q least significant bits is set based on an order of LCH IDs corresponding to the RLC entities established on the first node, and Q is a positive integer; or
status information comprised in an LCH configuration corresponding to each RLC entity established on the first node and the second node, wherein the status information indicates whether the corresponding RLC entity is activated.

26. The communication method according to claim 22, wherein the third status indication information comprises:
a preset field, wherein one bit in the preset field is used to indicate whether an RLC entity established on the second node is activated, and in the preset field, positions of bits corresponding to RLC entities established on the second node are sorted based on values of LCH identifiers of the RLC entities established on the second node; or
status information comprised in an LCH configuration corresponding to each RLC entity established on the second node, wherein the status information indicates whether the corresponding RLC entity is activated.

27. The communication method according to claim 22, wherein the third status indication information comprises:
a preset field, wherein one bit in the preset field is used to indicate whether an RLC entity established on the first node and an RLC entity established on the second node are activated, and in the preset field, positions of bits corresponding to RLC entities established on the first node and the second node are sorted based on values of LCH identifiers of the RLC entities established on the first node and the second node; or
status information comprised in an LCH configuration corresponding to each RLC entity established on the first node and the second node, wherein the status information indicates whether the corresponding RLC entity is activated.

28. A communications apparatus, configured to perform operations performed by the first node in the method according to any one of claims 1 to 11.

29. A communications apparatus, configured to perform operations performed by the second node in the method according to any one of claims 11 to 21.

30. A communications apparatus, configured to perform operations performed by the terminal device in the method according to any one of claims 22 to 27.

31. A communications device, comprising:
a memory, wherein the memory is configured to store a computer program;
a transceiver, wherein the transceiver is configured to perform transmitting and receiving steps in the method according to any one of claims 1 to 27; and
a processor, wherein the processor is configured to invoke and run the computer program in the memory, so that the communications device performs the method according to any one of claims 1 to 27.

32. A computer-readable storage medium, wherein
the computer-readable storage medium stores a computer program; and
when the computer program is run on a computer, the computer is enabled to perform the method according to any one of claims 1 to 25.

33. A communications system, comprising:
the communications apparatus according to claim 28, the communications apparatus according to claim 29, and the communications apparatus according to claim 30.
